# EUROPÄISCHE PATENTSCHRIFT

(11) **EP 3 669 471 B1**
(45) Veröffentlichungstag und Bekanntmachung des Hinweises auf die Patenterteilung: **01.09.2021**
(21) Anmeldenummer: 18742904.8
(22) Anmeldetag: 06.07.2018
(51) Int. Cl.: H04B 10/40, H04B 10/50, H04B 10/63

(54) **VERFAHREN ZUM EMPFANGEN EINES MODULIERTEN OPTISCHEN SIGNALS SOWIE EMPFANGSEINHEIT**
METHOD FOR RECEIVING A MODULATED OPTICAL SIGNAL AND RECEIVER UNIT
PROCÉDÉ DE RÉCEPTION D'UN SIGNAL OPTIQUE MODULÉ ET UNITÉ DE RÉCEPTION

(30) Priorität: 20.07.2017 AT 506062017
(43) Veröffentlichungstag der Anmeldung: 24.06.2020
(73) Patentinhaber: AIT Austrian Institute of Technology GmbH, 1210 Wien (AT)
(72) Erfinder: SCHRENK, Bernhard, 2122 Ulrichskirchen (AT)
(74) Vertreter: Wildhack & Jellinek
(86) Internationale Anmeldenummer: PCT/AT2018/060137
(87) Internationale Veröffentlichungsnummer: WO 2019/014694

(56) Entgegenhaltungen:
- EP-A2- 0 872 968
- ANDREAS STOHR ET AL: "Full-Duplex Fiber-Optic RF Subcarrier Transmission Using a Dual-Function Modulator/Photodetector", IEEE TRANSACTIONS ON MICROWAVE THEORY AND TECHNIQUES, PLENUM, USA, Bd. 47, Nr. 7, 1. Juli 1999 (1999-07-01), XP011037660, ISSN: 0018-9480
- C. BOERNER ET AL: "160?Gbit/s clock recovery with electro-optical PLL using bidirectionally operated electroabsorption modulator as phase comparator", ELECTRONICS LETTERS, Bd. 39, Nr. 14, 1. Januar 2003 (2003-01-01), Seite 1071, XP055505697, GB ISSN: 0013-5194, DOI: 10.1049/el:20030674
- BERNHARD SCHRENK: "Injection-Locked Coherent Reception Through an Externally Modulated Laser", IEEE JOURNAL OF SELECTED TOPICS IN QUANTUM ELECTRONICS., Bd. 24, Nr. 2, 1. März 2018 (2018-03-01), Seiten 1-7, XP055505696, US ISSN: 1077-260X, DOI: 10.1109/JSTQE.2017.2776518
- SCHRENK BERNHARD: "The EML as Coherent Optical Receiver", 2017 EUROPEAN CONFERENCE ON OPTICAL COMMUNICATION (ECOC), IEEE, 17. September 2017 (2017-09-17), Seiten 1-3, XP033336279, DOI: 10.1109/ECOC.2017.8345953 [gefunden am 2018-04-24]

## Beschreibung

Die Erfindung betrifft ein Verfahren zum Empfang eines optischen, modulierten Signals gemäß dem Oberbegriff des Patentanspruchs 1. Weiters betrifft die Erfindung eine Übertragungseinheit nach Anspruch 9, die insbesondere zur Durchführung eines erfindungsgemäßen Verfahrens geeignet ist. Darüber hinaus betrifft die Erfindung einen Zentralknoten und einen Antennenknoten gemäß den Ansprüchen 13 bzw. 15. Schließlich betrifft die Erfindung auch ein Datenübertragungsnetzwerk gemäß Anspruch 17 sowie ein Datenübertragungsnetzwerk gemäß Anspruch 19.

Die EP 0872968 A2 zeigt eine Sendeanordnung für optische Signale zum Senden und Modulieren, aber auch zum Empfangen modulierter Signale dient. Die Sendeanordnung umfasst eine direkt modulierbare Strahlungsquelle und einen nachgeschalteten Elektroabsorptionsmodulator und ermöglicht Duplex- sowie Halbduplexbetrieb, wobei der Elektroabsorptionsmodulator in beiden Fällen für Empfangsstrahlung absorbierend und detektierend wirkt.

Aus dem Stand der Technik sind Vorrichtungen zum Senden von Daten oder Signalen umfassend einerseits einen Laser und andererseits einen Elektroabsorptionsmodulator bekannt. Das vom Laser ausgesendete Licht wird dabei durch den Elektroabsorptionsmodulator abgeschwächt, sodass das Licht am Ausgang des Elektroabsorptionsmodulators moduliert vorliegt und über einen Lichtwellenleiter in ein Datennetzwerk eingekoppelt werden kann.

Erste Aufgabe ist es, bei einer solchen Konfiguration die Möglichkeit zur Verfügung zu stellen, Daten oder Signale mit derselben Übertragungseinheit, zu übermitteln bzw. zu empfangen.

Die Erfindung betrifft ein Verfahren zum Empfangen eines modulierten, insbesondere amplitudenmodulierten, vorzugsweise durch Modulation von Licht erstellten, optischen Empfangssignals,
- mit einer Übertragungseinheit umfassend einen Laser mit einem elektrischen Eingang zur Steuerung des Laserstroms sowie der Frequenz des vom Laser abgegebenen Lichts, wobei der Laser einen optischen Laserausgang aufweist, sowie einen dem optischen Laserausgang nachgeschalteten Elektroabsorptionsmodulator, der einen elektrischen Modulationsanschluss aufweist,
- wobei der Laser auf den Elektroabsorptionsmodulator gerichtet wird und das Licht des Lasers durch den Elektroabsorptionsmodulator hindurch geleitet wird und an einem optischen Anschluss des Elektroabsorptionsmodulators in einen Lichtwellenleiter eingekoppelt wird.

Erfindungsgemäß ist bei einem Verfahren zum Empfangen eines derartigen optischen Empfangssignals vorgesehen,
- dass das empfangene optische Empfangssignal, mit einer optischen Frequenz innerhalb eines vorgegebenen optischen Frequenzbereichs über den Lichtwellenleiter durch den Elektroabsorptionsmodulator hindurch auf den Laser gerichtet wird,
- dass der Laser durch Ansteuerung des elektrischen Eingangs auf eine vorgegebene optische Frequenz voreingestellt wird, die innerhalb eines optischen Frequenzbereichs, der insbesondere innerhalb von +/- 1 GHz um die optische Frequenz des empfangenen optischen Empfangssignals liegt,
- dass aufgrund der Einstrahlung des optischen Empfangssignals auf den Laser die optische Frequenz des vom Laser abgestrahlten Lichts an die optische Frequenz des empfangenen optischen Empfangssignals angepasst und/oder angeglichen wird,
- dass das vom Laser abgestrahlte Licht und das über den Lichtwellenleiter empfangene optische Empfangssignal im Elektroabsorptionsmodulator überlagert werden, dass das derart erstellte Überlagerungssignal vom Elektroabsorptionsmodulator in ein elektrisches Empfangssignal, insbesondere in ein elektrisches Stromsignal, umgewandelt wird, das vorzugsweise dem Stromverlauf am elektrischen Modulationsanschluss des Elektroabsorptionsmodulators entspricht, und
- ein Empfangssignal zur Verfügung gestellt wird, das dem elektrischen Empfangssignal entspricht oder von diesem abgeleitet ist, und an einem Signalanschluss, insbesondere als Strom- oder Spannungssignal, zur Verfügung gehalten wird.

Die Erfindung betrifft auch ein Verfahren zum Empfangen eines modulierten Empfangssignals mit einer Übertragungseinheit umfassend einen Laser und einen Elektroabsorptionsmodulator. Die Erfindung sieht vor, dass das empfangene optische Empfangssignal auf den Laser gerichtet wird, dass aufgrund der Einstrahlung des optischen Empfangssignals auf den Laser die optische Frequenz des vom Laser abgestrahlten Lichts an die optische Frequenz des empfangenen optischen Empfangssignals angepasst und/oder angeglichen wird, dass das vom Laser abgestrahlte Licht und das über den Lichtwellenleiter empfangene optische Empfangssignal im Elektroabsorptionsmodulator überlagert werden, dass das derart erstellte Überlagerungssignal vom Elektroabsorptionsmodulator in ein elektrisches Empfangssignal, insbesondere in ein elektrisches Stromsignal, umgewandelt wird, und dass ein Empfangssignal zur Verfügung gestellt wird, das dem elektrischen Empfangssignal entspricht oder von diesem abgeleitet ist.

Diese Maßnahme ermöglicht es auf einfache Weise, eine an sich bekannte Kombination eines Lasers und eines Elektroabsorptionsmodulators zum Empfangen von optischen Signalen zu betreiben.

Darüber hinaus kann zum gleichzeitigen Senden und Empfangen von Daten, insbesondere im Duplexbetrieb, vorgesehen sein,
a) dass ein zu übertragendes Sendesignal als elektrisches Sendesignal, insbesondere als elektrisches Spannungssignal, zur Verfügung gestellt wird,
b) dass das elektrische Sendesignal als Spannungssignal während des erfindungsgemäßen Empfangs an den Modulationsanschluss des Elektroabsorptionsmodulators angelegt wird und derart durch Modulation des vom Laser erzeugten Lichts ein optisches Sendesignal erstellt in den Lichtwellenleiter eingekoppelt wird,
c) dass der vom Elektroabsorptionsmodulator aufgenommene Strom ermittelt und derart ein Stromsignal erstellt wird, der bei Vorgabe dieses elektrischen Sendesignals vom Elektroabsorptionsmodulator aufgenommen wird,
d) dass aufgrund von vorgegebenen Kriterien derjenige zeitliche Stromverlauf modelliert wird, der sich bei einer vorgegebenen Bestrahlung des Elektroabsorptionsmodulators durch das Licht des Lasers und einer vorgegebenen Signalbeaufschlagung mit dem elektrischen Sendesignal am elektrischen Modulationsanschluss des Elektroabsorptionsmodulators ergibt, wenn über den Lichtwellenleiter kein optisches Empfangssignal empfangen wird oder ein optisches Empfangssignal empfangen wird, das kein moduliertes Signal enthält, und dieser Stromverlauf als modellierter Stromverlauf zur Verfügung gehalten wird,
e) dass die Differenz zwischen dem in Schritt c) gemessenen Stromverlauf und dem in Schritt d) modellierten Stromverlauf gebildet wird, und
f) dass diese Differenz als vom optischen Empfangssignal herrührend angenommen und als Empfangssignal bereitgestellt wird.

Eine bevorzugte Ausführungsform, die auf die sich ändernden Ausbreitungseigenschaften von Lichtwellen im Lichtwellenleiter, insbesondere auf zeitlich variierendes Polarisationsverhalten des Lichtwellenleiters Rücksicht nimmt, sieht vor,
- dass das Licht des Lasers zusätzlich auf einen weiteren Elektroabsorptionsmodulator gerichtet wird,
- dass die optischen Anschlüsse der beiden Elektroabsorptionsmodulatoren an jeweils einen der beiden Polarisationseingänge eines Polarisationsstrahlteilers angeschlossen werden und der Ausgang des Polarisationsstrahlteilers mit dem Lichtwellenleiter gekoppelt wird,
- dass mit beiden Elektroabsorptionsmodulatoren jeweils ein elektrisches Empfangssignal ermittelt wird, wobei das elektrische Empfangssignal mit der höheren Signalstärke als Empfangssignal zur Verfügung gehalten wird..

Eine bevorzugte Ausführungsform der Erfindung, die in einem solchen Fall einen Duplexbetrieb auf einfache Weise ermöglicht, sieht vor, dass derjenige Elektroabsorptionsmodulator für das Versenden des optischen Sendesignals herangezogen wird, an dem das jeweils schwächere elektrische Empfangssignal ermittelt wurde, wobei insbesondere das zu übertragende Sendesignal, vorzugsweise in Form eines elektrischen Spannungssignals, an den Modulationsanschluss desjenigen Elektroabsorptionsmodulators angelegt wird, an dem das jeweils schwächere elektrische Empfangssignal ermittelt wird.

Eine weitere vorteilhafte Ausführungsform der Erfindung, die einen Duplexbetrieb im Zeit-Multiplex ermöglicht, sieht vor, dass zur Erstellung eines modulierten optischen Empfangssignals Licht mit einer vorgegebenen optischen Frequenz mit einem zu übertragenden Signal moduliert wird, und wobei abwechselnd in hintereinanderfolgenden Zeitabschnitten
- Signale gemäß einem erfindungsgemäßen Verfahren empfangen werden, wobei die optische Frequenz des Lasers auf die vorgegebene optische Frequenz eingestellt wird, und
- anschließend im jeweils nachfolgenden Zeitabschnitt Licht mit derselben vorgegebenen optischen Frequenz vom Laser auf den Elektroabsorptionsmodulator abgegeben wird und ein zu übertragendes Sendesignal, insbesondere in Form eines elektrischen Spannungssignals am elektrischen Modulationsanschluss des Elektroabsorptionsmodulators vorgegeben wird, sodass das durch den Elektroabsorptionsmodulator hindurchgehende Licht entsprechend dem zu übertragenden Sendesignal abgeschwächt wird und das derart erhaltene optische Sendesignal in den Lichtwellenleiter eingekoppelt und übertragen wird..

Eine weitere vorteilhafte Ausführungsform der Erfindung, die einen Duplexbetrieb im Frequenz-Multiplex ermöglicht, sieht vor, dass
- zur Erstellung des Empfangssignals ein Datensignal mit einer vorgegebenen ersten elektrischen Frequenz moduliert wird, sodass es Frequenzanteile innerhalb ersten Frequenzbereichs um die vorgegebene elektrische Frequenz aufweist und das derart erhaltene Signal anschließend zur Modulation von Licht mit einer vorgegebenen optischen Frequenz verwendet wird und derart ein optisches moduliertes Empfangssignal erhalten wird,
- dass dieses Empfangssignal gemäß einem erfindungsgemäßen Verfahren unter Verwendung von Licht mit der vorgegebenen optischen Frequenz erhalten wird und derart ein elektrisches Empfangssignal erhalten wird, das Frequenzanteile innerhalb eines vorgegebenen ersten elektrischen Frequenzbereichs aufweist, und
- gleichzeitig ein elektrisches Sendesignal, das Signalanteile innerhalb eines vom ersten Frequenzband verschiedenen und mit diesem nicht überlappenden, vorzugsweise von diesem beabstandeten, elektrischen Frequenzbands aufweist, an den Elektroabsorptionsmodulator angelegt wird und mittels des Lasers Licht mit der vorgegebenen optischen Frequenz auf den Elektroabsorptionsmodulator abgegeben wird,
- sodass das durch den Elektroabsorptionsmodulator hindurchgehende Licht entsprechend dem zu übertragenden Sendesignal abgeschwächt wird und das derart erhaltene optische Sendesignal in den Lichtwellenleiter eingekoppelt und übertragen wird.

Eine besonders vorteilhafte Art des Betriebs eines Mobilfunknetzwerks zum Übertragen von Signalen von einem Zentralknoten zu einem Antennenknoten sieht vor,
- dass ein, insbesondere zuvor über ein Datennetz empfangenes, Datensignal im Zentralknoten bereitgestellt wird und anschließend mit zumindest einer von einem Oszillator vorgegebenen Frequenz moduliert wird und derart ein moduliertes elektrisches Signal erstellt wird,
- wobei mittels einer zentralen Übertragungseinheit aufgrund des modulierten, elektrischen Signals ein optisches, moduliertes Signal bereitgestellt und in den Lichtwellenleiter eingekoppelt und einen der Antennenknoten übertragen wird,
- wobei aufgrund des so erstellten optischen Signals im Antennenknoten gemäß einem der vorangehenden Ansprüche ein Empfangssignal mittels einer antennenseitigen Übertragungseinheit ermittelt und am Signalanschluss der antennenseitigen Übertragungseinheit bereitgestellt wird, und
- wobei das Empfangssignal, gegebenenfalls verstärkt, vorzugsweise in Form eines Strom- oder Spannungssignals, an die Antenne des Antennenknotens übertragen wird und von dieser abgestrahlt wird.

Wesentlicher Vorteil dieses Verfahrens ist es, dass es nicht erforderlich ist, dass in den einzelnen Antennenknoten Oszillatoren für die Transponierung bzw. Frequenzumsetzung der empfangenen Signale sowie keine Digital-zu-Analog Wandler vorhanden sein müssen, da zwischen den Antennenknoten und dem Zentralknoten Signale optisch und moduliert übertragen werden.

Besonders bevorzugt kann zur Übertragung von Signalen von mobilen Endgeräten über einen Antennenknoten und einem Zentralknoten in ein Datennetz vorgesehen sein,
- dass von der Antenne des Antennenknotens einlangende modulierte, elektromagnetische Signale, insbesondere Mobilfunksignale, empfangen und, gegebenenfalls verstärkt, an den Signalanschluss der antennenseitigen Übertragungseinheit des Antennenknotens weitergeleitet werden, und von der antennenseitigen Übertragungseinheit nach einem der vorangehenden Ansprüche ein optisches Signal erstellt und über den Lichtwellenleiter an den Zentralknoten übertragen wird,
- dass dieses optische Signal im Zentralknoten empfangen und insbesondere gemäß einem erfindungsgemäßen Verfahren, mittels der zentralen Übertragungseinheit, in ein elektrisches Signal umgewandelt wird,
- dass dieses elektrische Signal unter Verwendung einer vom Oszillator vorgegebenen Frequenz demoduliert wird und das derart demodulierte Datensignal im Zentralknoten zur Verfügung gehalten und gegebenenfalls über das Datennetz weiter übermittelt wird.

Erfindungsgemäß sind zudem bei einer Übertragungseinheit zum Empfangen eines optischen Empfangssignals vorgesehen
- ein Laser mit einem elektrischen Eingang und einem optischen Laserausgang,
- zumindest ein dem optischen Laserausgang des Lasers nachgeschalteter Elektroabsorptionsmodulator mit einem elektrischen Modulationsanschluss und einem optischen Anschluss zur optischen Ankopplung des Elektroabsorptionsmodulators an einen Lichtwellenleiter,
   wobei der Laser derart auf den optischen Anschluss des Elektroabsorptionsmodulators ausgerichtet und positioniert ist, dass das Licht des Lasers am optischen Anschluss aus dem Elektroabsorptionsmodulator austritt und dass vom am optischen Anschluss aus auf den Elektroabsorptionsmodulator eintreffendes Licht auf den Laser gerichtet ist,
   wobei der Elektroabsorptionsmodulator dazu ausgebildet ist, vom Laser abgestrahltes Licht und ein am optischen Anschluss einlangendes optisches Empfangssignal zu überlagern, und an seinem elektrischen Modulationsanschluss ein elektrisches Empfangssignal bereitzuhalten, das einem Überlagerungssignal des vom Laser abgestrahlten Lichts und des optischen Empfangssignals entspricht, und
- eine mit dem elektrischen Eingang des Lasers und dem elektrischen Modulationsanschluss des Elektroabsorptionsmodulators verbundene Steuereinheit mit einem elektrischen Signalanschluss, wobei die Steuereinheit dazu ausgebildet ist,
   - den Laserstrom sowie die Frequenz des vom Laser abgegebenen Lichts über den elektrischen Eingang des Lasers auf einen Wert innerhalb eines optischen Frequenzbereichs festzulegen, der insbesondere im Bereich von +/- 1 GHz um die Wellenlänge des im Lichtwellenleiter geführten Lichts oder um die optische Frequenz des empfangenen optischen Empfangssignals liegt, und
   - das elektrische Empfangssignal am elektrischen Modulationsanschluss des Elektroabsorptionsmodulators zu analysieren und derart ein dem am optischen Anschluss einlangenden optischen Empfangssignal entsprechendes Empfangssignal zur Verfügung zu halten.

Eine solche Übertragungseinheit ermöglicht es, mit einem einfachen Aufbau mit an sich bekannten Komponenten zum Übertragen von optischen Signalen eine Übertragungseinheit zu erstellen, die auch in der Lage ist, optische Signale zu empfangen.

Darüber hinaus kann zum gleichzeitigen Senden und Empfangen von Daten, insbesondere im Duplexbetrieb, vorgesehen sein, dass die Steuereinheit ferner dazu ausgebildet ist,
- basierend auf dem an ihrem Signalanschluss anliegenden, zu übertragenden Sendesignal als elektrisches Sendesignal zu erstellen während des Empfangs von Signalen an den Modulationsanschluss des Elektroabsorptionsmodulators anzulegen,
- den vom Elektroabsorptionsmodulator aufgenommen Strom zu ermitteln und derart ein Stromsignal zu erstellen,
- aufgrund von vorgegebenen Kriterien denjenigen zeitlichen Stromverlauf zu modellieren, der sich bei einer vorgegebenen Bestrahlung des Elektroabsorptionsmodulators durch das Licht des Lasers und einer vorgegebenen Signalbeaufschlagung am elektrischen Modulationsanschluss des Elektroabsorptionsmodulators ergibt, wenn über den Lichtwellenleiter kein optisches Empfangssignal einlangt oder ein optisches Empfangssignal einlangt, das kein moduliertes Signal enthält, und dieser Stromverlauf als modellierten Stromverlauf zur Verfügung zu halten,
- die Differenz zwischen dem gemessenen Stromverlauf und dem modellierten Stromverlauf zu bilden, und diese Differenz oder einen davon abgeleiteten Signalverlauf als Empfangssignal bereitzustellen.

Eine bevorzugte Ausführungsform, die auf die sich ändernden Ausbreitungseigenschaften von Lichtwellen im Lichtwellenleiter, insbesondere auf zeitlich variierendes Polarisationsverhalten des Lichtwellenleiters Rücksicht nimmt, sieht vor,
- dass ein weiterer Elektroabsorptionsmodulator vorgesehen ist, auf den das Licht des Lasers gerichtet ist,
- dass die optischen Anschlüsse der beiden Elektroabsorptionsmodulatoren an jeweils einen der beiden Polarisationseingänge eines Polarisationsstrahlteilers angeschlossen sind und der Ausgang des Polarisationsstrahlteilers mit dem Lichtwellenleiter gekoppelt ist,
- dass beide Elektroabsorptionsmodulatoren jeweils dazu ausgebildet sind, an ihrem elektrischen Modulationsanschluss ein elektrisches Empfangssignal zu ermitteln, und
- dass die Steuereinheit dazu ausgebildet ist, dasjenige elektrisches Empfangssignal mit der höheren Signalstärke als Empfangssignal an ihrem Signalanschluss zur Verfügung zu halten.

Eine bevorzugte Ausführungsform der Erfindung, die in einem solchen Fall einen Duplexbetrieb auf einfache Weise ermöglicht, sieht vor, dass die Steuereinheit dazu ausgebildet ist, denjenigen Elektroabsorptionsmodulator für das Versenden des optischen Sendesignals auszuwählen, an dem sie das jeweils schwächere elektrische Empfangssignal ermittelt hat, wobei sie das zu übertragende Sendesignal, insbesondere in Form eines elektrischen Spannungssignals, an den Modulationsanschluss desjenigen Elektroabsorptionsmodulators anlegt, an dem sie das jeweils schwächere elektrische Empfangssignal ermittelt hat.

Ein bevorzugter Zentralknoten, mit dem es innerhalb eines Mobilfunknetzwerks möglich ist, optische Signale derart zu übertragen, dass diese in den Antennenknoten nicht moduliert zu werden brauchen und daher in den Antennenknoten kein Oszillator bzw. Frequenzumsetzer sowie keine Digital-zu-Analog Wandler vorhanden sein braucht, sieht vor:
- Eine Datenvermittlungseinheit mit zumindest einem Datenanschluss zum Anschluss an ein Datennetz, zumindest einem Modulationsanschluss und zumindest einem Frequenzeingang,
- einen mit dem Frequenzeingang verbundenen Oszillator, wobei der Oszillator zur Erstellung von Frequenzsignalen nach vorgegebenen Kriterien und zur Übermittelung der Frequenzsignalen an den Frequenzeingang ausgebildet ist, und
- zumindest eine erfindungsgemäße zentrale Übertragungseinheit, wobei der Signalanschluss der zentralen Übertragungseinheit mit einem Modulationsanschluss der Datenvermittlungseinheit verbunden ist und ein Lichtwellenleiter in den optischen Anschluss der zentralen Übertragungseinheit eingekoppelt ist,
wobei die Datenvermittlungseinheit dazu ausgebildet ist,
- ein über das Datennetz am Datenanschluss einlangendes Datensignal nach einem vorgegebenen Modulationsverfahren auf zumindest ein vom Oszillator an den Frequenzeingang übermitteltes Frequenzsignal aufzumodulieren und am Modulationsanschluss als moduliertes Sendesignal bereitzustellen und nach vorgegebenen Kriterien an die entsprechende zentrale Übertragungseinheit zu übermitteln und
- ein über den Modulationsanschluss von der zentralen Übertragungseinheit einlangendes Empfangssignal nach einem vorgegebenen Demodulationsverfahren mittels eines vom Oszillator vorgegebenen Frequenzsignals zu demodulieren und am ersten elektrischen Datenanschluss als demoduliertes Datensignal bereitzustellen und an das Datennetz weiterzuleiten.

Besonders bevorzugt kann zum Senden von Signalen vom vorteilhaften Zentralknoten zu einem der Antennenknoten vorgesehen sein, dass die zentrale Übertragungseinheit vorzugsweise dazu ausgebildet ist,
- mittels eines Lasers Licht zu erstellen und auf einen Elektroabsorptionsmodulator zu richten und derart
   - ein am Signalanschluss der zentralen Übertragungseinheit von der Datenvermittlungseinheit einlangendes Sendesignal als moduliertes optisches Sendesignal am optischen Anschluss bereitzustellen, in den Lichtwellenleiter einzukoppeln, und insbesondere an einen Antennenknoten zu übertragen, und
   - ein, insbesondere von einem Antennenknoten, über den Lichtwellenleiter am optischen Anschluss einlangendes optisches Empfangssignal als Empfangssignal am Signalanschluss zur Verfügung zu stellen und an die Datenvermittlungseinheit zu übermitteln.

Ein Antennenknoten zur drahtlosen Übertragung von Daten an ein Mobilfunkgerät mit einer Antenne, der optische Signale auf einfache Weise weiter verarbeiten kann und insbesondere keines eigenen Oszillators, Frequenzumsetzers oder Digital-zu-Analog Wandlers bedarf, sieht vor:
- eine Mobilfunkantenne, wobei die Mobilfunkantenne dazu ausgebildet ist, mit dem Mobilfunkgerät in Funkverbindung zu treten,
- zumindest eine erfindungsgemäße antennenseitige Übertragungseinheit, deren Signalanschluss an die Antenne angeschlossen ist, und
- einen mit dem optischen Anschluss der antennenseitigen Übertragungseinheit verbundenen Lichtwellenleiter.

Dabei kann insbesondere vorgesehen sein, dass die antennenseitige Übertragungseinheit insbesondere dazu ausgebildet ist, mittels eines Lasers Licht zu erstellen und auf einen Elektroabsorptionsmodulator zu richten und derart
- ein an ihrem Signalanschluss vom Verstärker einlangendes Signal als moduliertes optisches Signal am optischen Anschluss bereitzustellen, in den Lichtwellenleiter einzukoppeln, und insbesondere an einen Zentralknoten zu übertragen, und
- ein, insbesondere von einem Zentralknoten, über den Lichtwellenleiter am optischen Anschluss einlangendes optisches Signal als Sendesignal am Signalanschluss zur Verfügung zu stellen und über den bidirektionalen Verstärker an die Mobilfunkantenne zu übermitteln.

Zur Verstärkung der Signale vor der Signalübertragung kann vorgesehen sein, dass der Antennenknoten einen an die Mobilfunkantenne angeschlossenen bidirektionalen Verstärker umfasst,
- der an den Signalanschluss der antennenseitigen Übertragungseinheit angeschlossen ist, und
- der dazu ausgebildet ist,
   - die von der Mobilfunkantenne aufgenommenen Daten zu verstärken und als elektrisches Empfangssignal an den Signalanschluss der antennenseitigen Übertragungseinheit weiterzuleiten, und
   - von der antennenseitigen Übertragungseinheit an ihrem bereitgestellte Signale zu verstärken und an die Mobilfunkantenne zur Übermittlung weiterzuleiten.

Ein Datenübertragungsnetzwerk, bei dem die zuvor erwähnten Antennenknoten mit einem Zentralknoten verbunden sind, und bei dem die Notwendigkeit entfällt, dass in den einzelnen Antennenknoten ein separater Oszillator, Frequenzumsetzer oder Digital-zu-Analog Wandler vorhanden ist, sieht vor:
- Einen erfindungsgemäßen Zentralknoten und
- eine Vielzahl von erfindungsgemäßen Antennenknoten,
wobei jeweils der optische Anschluss der antennenseitigen Übertragungseinheit des Antennenknotens und der optische Anschluss der zentralen Übertragungseinheiten des Zentralknotens miteinander über jeweils einen Lichtwellenleiter verbunden sind, und wobei vorzugsweise zumindest eine mit der Mobilfunkantennen in Funkverbindung stehendes, Mobilfunkgerät.

Ein Datenaustauschnetzwerk, mit dem auf einfache Weise eine Vielzahl von erfindungsgemäßen Übertragungseinheiten miteinander in Datenkommunikationsverbindung gebracht werden können, sieht vor:
- Eine zentrale Schnittstelle mit Anschlüssen und
- eine Vielzahl von erfindungsgemäßen Übertragungseinheiten, wobei der jeweilige optische Anschluss der einzelnen Übertragungseinheiten jeweils mit einem Anschluss der Schnittstelle mittels eines Lichtwellenleiters verbunden ist,
- wobei die Schnittstelle dazu ausgebildet ist, bei ihr über einen der Lichtwellenleiter einlangende, optische Signale zu verteilen und an die übrigen Übertragungseinheiten weiterzuleiten,
- wobei jeder Übertragungseinheit zumindest eine Sende- und Empfangsfrequenz zugeordnet ist und wobei in der jeweiligen Steuereinheit jeder der Übertragungseinheiten jeweils die den Sende- und Empfangsfrequenzen zugeordneten Übertragungseinheiten hinterlegt sind, und
- wobei die Steuereinheiten der Übertragungseinheiten dazu ausgebildet sind, im Fall der Datenübertragung ihren Laser durch Ansteuerung des jeweiligen elektrischen Eingangs auf eine optische Frequenz einzustellen, die sich in einem optischen Frequenzbereich, insbesondere von +/- 1 GHz um die optische Frequenz der für den Empfang ausgewählten Übertragungseinheit, befindet.

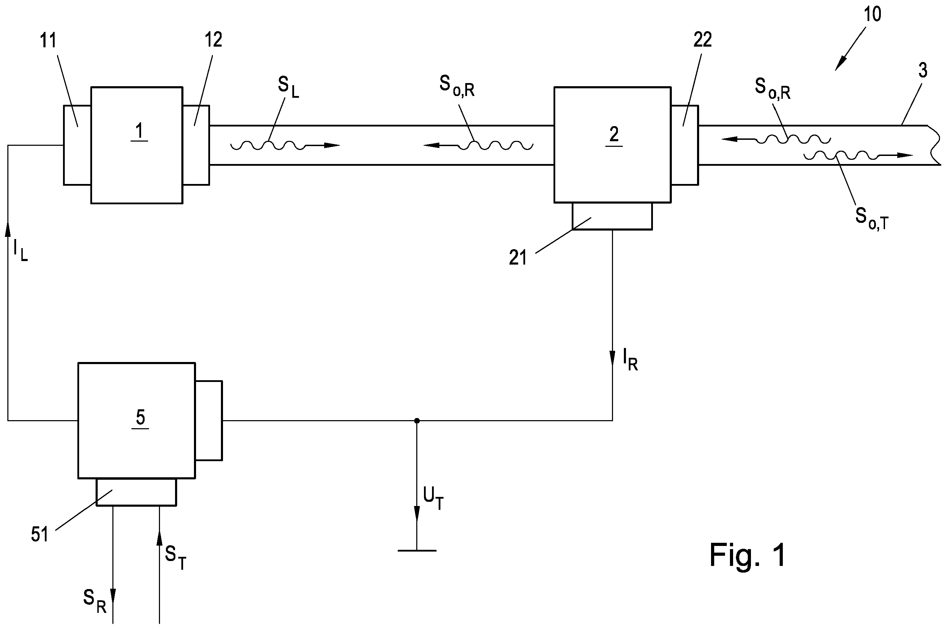

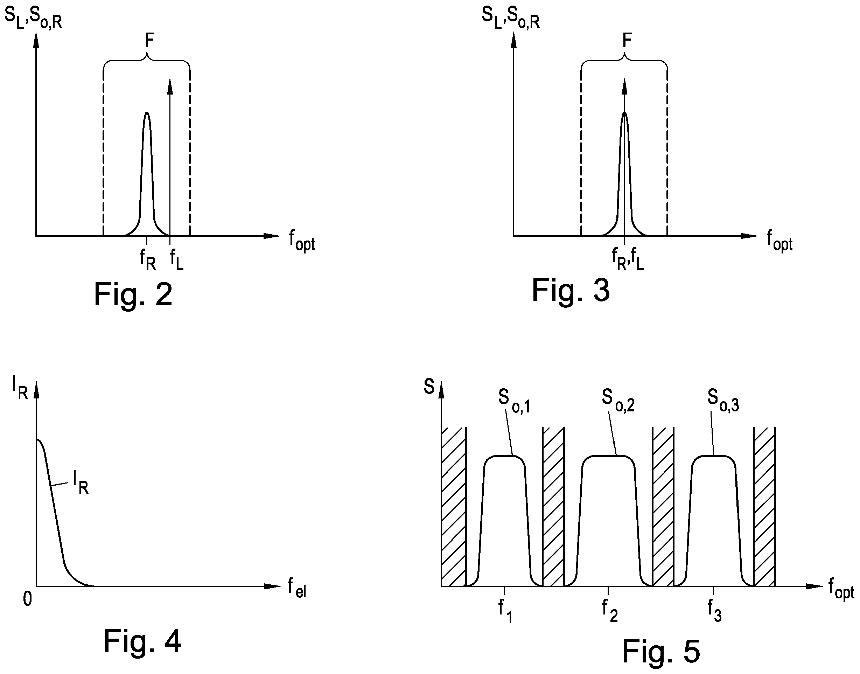

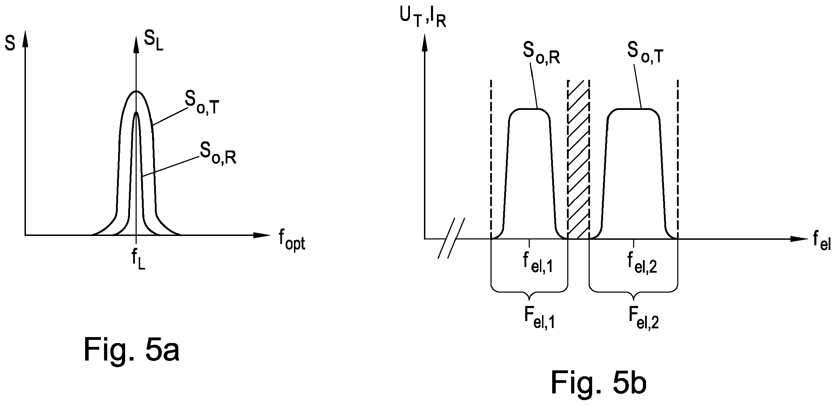

**Fig. 1** zeigt eine erste Ausführungsform einer erfindungsgemäßen Übertragungseinheit 10. **Fig. 2** zeigt ein spektrales Frequenzdiagramm des Lichts des Lasers in der optischen Ebene mit aufmoduliertem, zu empfangenden optischen Signal in der Ausgangssituation. **Fig. 3** zeigt ein spektrales Frequenzdiagramm des Lichts des Lasers sowie des zu empfangenden optischen Signals in der optischen Ebene nach der Anpassung der Laserfrequenz durch Injection Locking **Fig. 4** zeigt ein Frequenzdiagramm des elektrischen Basisband-Empfangssignals in der elektrischen Ebene nach der Anpassung der Laserfrequenz f_{L} an f_{R} durch Injection Locking. **Fig. 5** zeigt ein Frequenzdiagramm in der optischen Ebene bei Verwendung mehrerer optischer Signalfrequenzen. **Fig. 5a** und

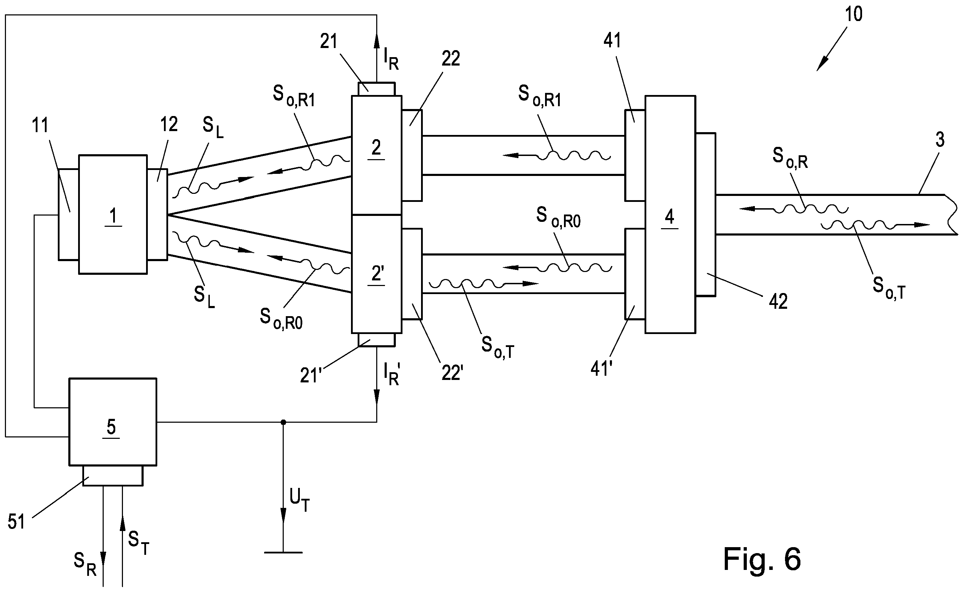

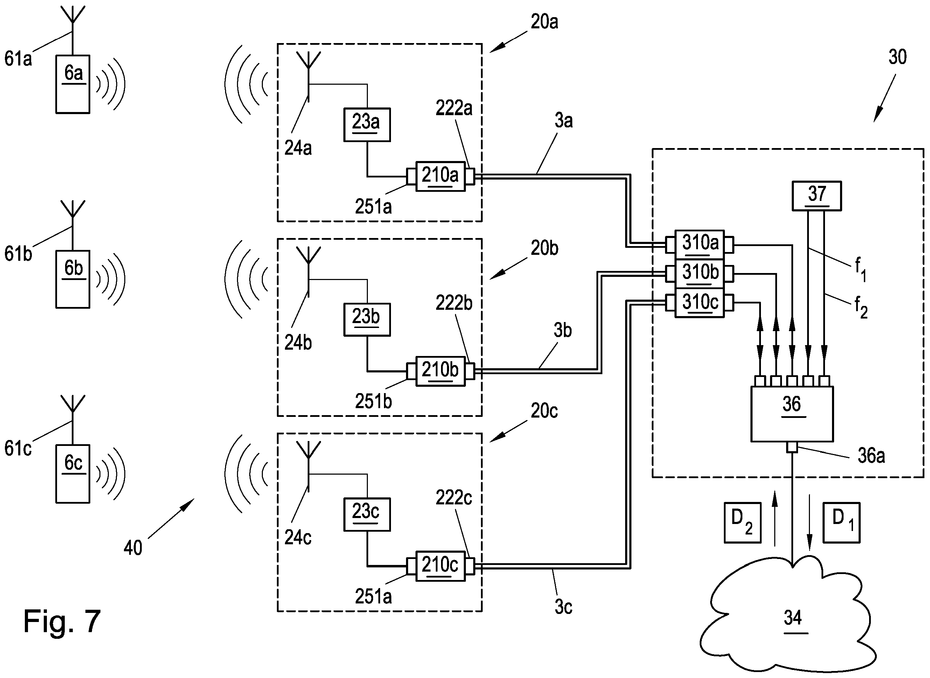

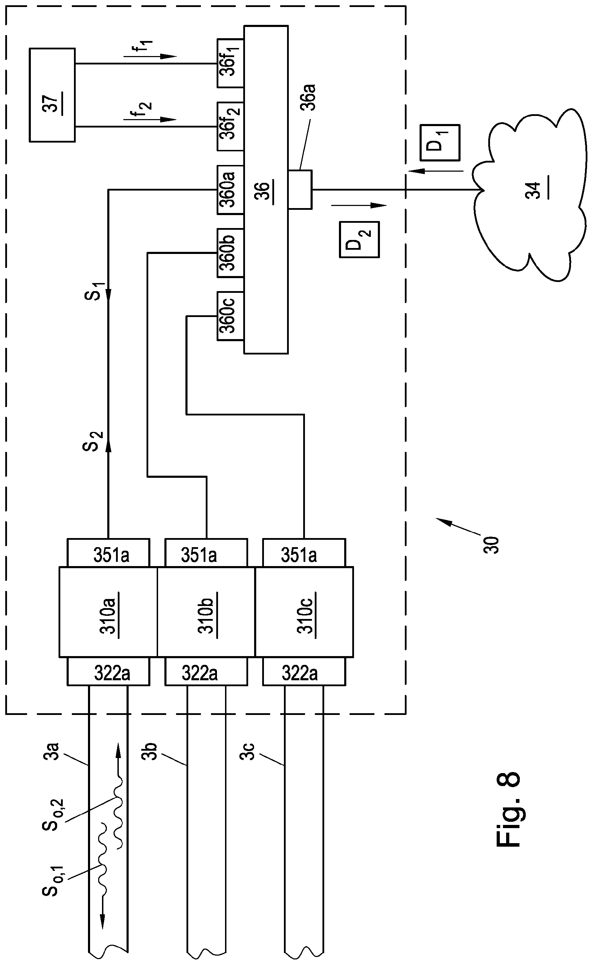

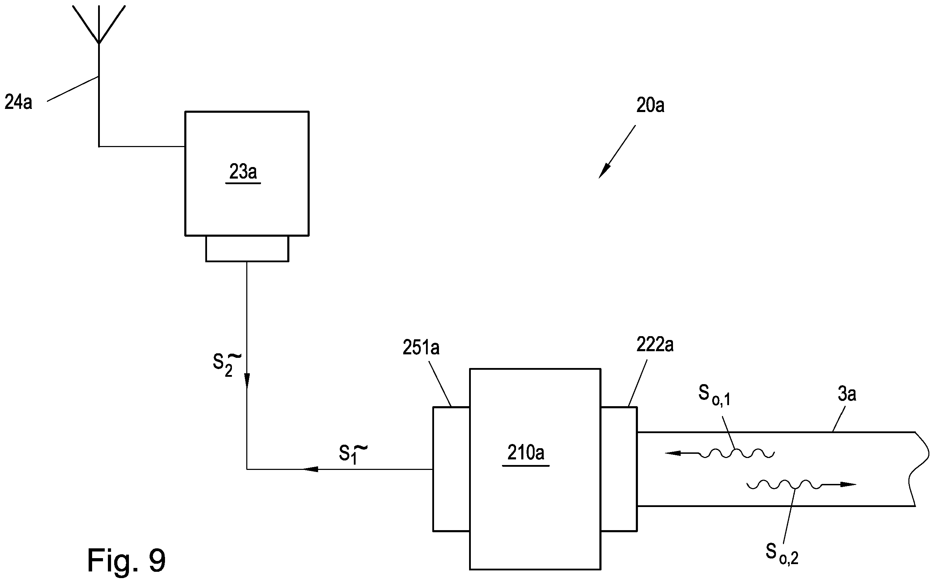

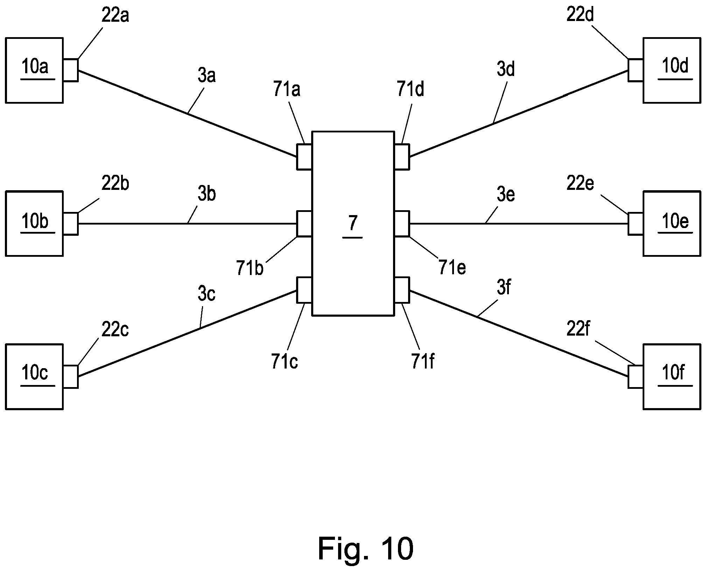

**Fig. 5b** zeigen die bei einer vorteilhaften Ausführungsform der Erfindung unter Verwendung von Frequenz-Multiplexing auftretenden optischen und elektrischen Signale. **Fig. 6** zeigt eine bevorzugte Ausführungsform zur Berücksichtigung von sich ändernden Polarisationseigenschaften von Lichtwellen im Lichtwellenleiter. **Fig. 7** zeigt dabei ein Datenübertragungsnetzwerk für den Mobilfunk im Überblick. **Fig. 8** zeigt einen Zentralknoten des in Fig. 7 dargestellten Datenübertragungsnetzwerks im Detail. **Fig. 9** zeigt einen Antennenknoten des in Fig. 7 dargestellten Datenübertragungsnetzwerks im Detail. **Fig. 10** zeigt ein Datenübertragungsnetzwerk gemäß einer bevorzugten Ausführungsform der Erfindung.

Die in **Fig. 1** dargestellte Übertragungseinheit entsprechend einer ersten Ausführungsform der Erfindung umfasst einen Laser 1, der einen elektrischen Eingang 11 aufweist, mit dem der bei der Erstellung des Lichts S_{L} verwendete Laserstrom I_{L} geregelt werden kann. Durch die Vorgabe des Laserstroms I_{L} kann die Wellenlänge bzw. Frequenz des vom Laser 1 abgegebenen Lichts S_{L} festgelegt werden.

Die Frequenz des vom Laser 1 abgegebenen Lichts S_{L} ist auch von der Temperatur des Lasers 1 abhängig. Dieser Umstand kann dazu genutzt werden, die Frequenz des Lichts S_{L} grob festzulegen. Die Feinsteuerung der Frequenz des Lichts S_{L} kann durch Variation des Laserstroms I_{L} vorgenommen werden. Zudem kann der Laser 1 temperaturstabilisiert sein, wodurch die Einflüsse von Schwankungen der Temperatur auf die Frequenz des Lichts S_{L} vermieden werden. Weiters weist der Laser 1 einen optischen Laserausgang 12 auf, von dem aus das vom Laser 1 erzeugte Licht S_{L} abgestrahlt wird.

Elektroabsorptionsmodulatoren, wie der in **Fig. 1** dargestellte Elektroabsorptionsmodulator 2, sind aus dem Stand der Technik bekannt, beispielsweise aus der folgenden Veröffentlichung: T. Ido et al., IEEE Phot. Tech. Lett., Vol. 6, no. 10, pp. 1207-1209 (1994). Derartige Elektroabsorptionsmodulatoren können zusammen mit Laserelementen wie dem Laser 1 auf einem Chip co-integriert werden.

Dieser Elektroabsorptionsmodulator 2 hat die Eigenschaft, dass bei ihm vom Laser 1 eintretendes Licht S_{L} abhängig von der am elektrischen Modulationsanschluss 21 des Elektroabsorptionsmodulators 2 der anliegenden Spannung abgeschwächt wird und als ausgehendes, optisches Signal S_{o,T} über einen optischen Anschluss 22 abgegeben und in einen Lichtwellenleiter 3 eingekoppelt wird. Der durch den elektrischen Modulationsanschluss 21 des Elektroabsorptionsmodulators 2 fließende elektrische Strom I_{R} ist dabei etwa proportional zu derjenigen Lichtmenge, die aus dem vom Laser 1 abgegebenen Licht S_{L} entnommen und nicht in das übertragene, optische Signal S_{o,T} weitergeleitet wird.

Der vorliegende Elektroabsorptionsmodulator 2 hat zusätzlich die Eigenschaft, dass ein bei ihm am optischen Anschluss 22 vom Lichtwellenleiter 3 her kommendes, empfangenes, optisches Empfangssignal S_{o,R} teilweise an den Laser 1 weitergeleitet wird, wobei der Elektroabsorptionsmodulator 2 abhängig von dem bei ihm einlangenden, empfangenen, optischen Empfangssignal S_{o,R} ein elektrisches Empfangssignal I_{R}, im vorliegenden Fall im Form eines Stromsignals, erstellt und an seinem elektrischen Modulationsanschluss 21 bereit hält. Dieses Stromsignal I_{R} ist proportional zu der im Elektroabsorptionsmodulator 2 vorherrschenden Lichtleistung oder Lichtintensität. Da die Frequenz des vom Laser 1 abgegebenen Lichts S_{L} ungefähr auf jene des optischen Empfangssignals S_{o,R} eingestellt ist und die Differenz der Frequenzen kleiner als die elektro-optische Bandbreite des Elektroabsorptionsmodulators 2 ist, ergibt sich kohärent-optische Detektion des optischen Empfangssignals S_{o,R}, welche im Gegensatz zur direkten optischen Detektion ohne lokalen optischen Oszillator, in Form eines Lasers 1 die im Allgemeinen bekannten Vorteile einer höheren Detektions-Empfindlichkeit und Frequenzselektivität ergibt, d.h. es findet eine Signalfilterung während der Detektion statt.

Ein gemäß einem Spannungssignal steuerbarer Anteil des beim Elektroabsorptionsmodulator 2 einlangenden, empfangenen, optischen Empfangssignals S_{o,R} wird durch den Elektroabsorptionsmodulator 2 hindurch auf den Laser 1 gerichtet. Dabei wird vorab durch Ansteuerung und Einstellung des Laserstroms I_{L} sichergestellt, dass das vom Laser 1 abgegebene Licht S_{L} eine vorgegebene optische Frequenz hat, die nahe der optischen Frequenz des einlangenden optischen Empfangssignals S_{o,R} liegt.

Das elektrische Empfangssignal I_{R} wird an eine Steuereinheit 5 weitergeleitet, die auch dazu ausgebildet ist, an den elektrischen Modulationsanschluss 21 des Elektroabsorptionsmodulators 2 ein vorgegebenes Spannungssignal anzulegen, um derart die Durchlässigkeit des Elektroabsorptionsmodulators 2 zu regeln. Darüber hinaus ist die Steuereinheit 5 auch dazu ausgebildet, den Laserstrom I_{L} derart einzustellen, dass das vom Laser 1 abgegebene Licht S_{L} eine vorgegebene optische Frequenz aufweist.

Die Steuereinheit 5 weist einen Signalanschluss 51 auf, über den bevorzugt auch bidirektionale Daten übertragen werden können. Sofern von dem Elektroabsorptionsmodulator 2 ein elektrisches Empfangssignal I_{R} in Form eines Stromsignals zur Verfügung gestellt wird, wird dieses Stromsignal von der Steuereinheit 5 gemessen und am Signalanschluss 51 der Steuereinheit 5 wird ein Empfangssignal S_{R} zur Verfügung gehalten, das diesem Stromsignal I_{R} entspricht.

Zum Versenden von optischen Signalen S_{o,T} mittels der in **Fig. 1** dargestellten Übertragungseinheit 10 wird am Signalanschluss 51 der Steuereinheit 5 ein Sendesignal S_{T} vorgegeben, das im vorliegenden Fall als elektrisches Spannungssignal an den elektrischen Modulationsanschluss 21 des Elektroabsorptionsmodulators 2 weitergeleitet wird.

**Fig. 2** zeigt ein spektrales, optisches Frequenzdiagramm des Lichts S_{L} des Lasers 1 sowie des empfangenen optischen Signals S_{o,R} in der Ausgangssituation. Die Frequenz f_{L} des Lichts S_{L} wird im vorliegenden Ausführungsbeispiel der Erfindung innerhalb eines optischen Frequenzbereichs F von typisch ±1 GHz um die optische Frequenz f_{R} des empfangenen, optischen Signals S_{o,R} liegt. Ebenso kann die Frequenz f_{L} des Lichts S_{L} des Lasers 1 derart eingestellt werden, dass sie innerhalb eines optischen Frequenzbereichs F von typisch ±1 GHz um eine vorgegebene optische Frequenz liegt, die für das Versenden des optischen Empfangssignals S_{o,R} vorgegeben ist.

Dadurch, dass somit auf den Laser 1 das Empfangssignal S_{o,R} einstrahlt, das annähernd dieselbe Frequenz hat, wie das vom Laser 1 abgegebene Licht S_{L}, kommt es zu einem als "Injection Locking" bekannten Effekt, bei dem sich die Frequenz des vom ("Slave"-)Laser 1 abgestrahlten Lichts S_{L} an die optische ("Master"-)Frequenz des empfangenen, optischen Signals S_{o,R} angleicht. Dadurch ergibt sich der entscheidende Vorteil der gegenständlichen Methode: Die kohärent-optische Detektion des optischen Empfangssignals S_{o,R} erfolgt nicht mit ungefährer Anpassung der optischen Frequenzen des Lasers 1 und des Signals S_{o,R}, was dem Fall der Intradyne-Detektion entspricht, sondern mit exakter Anpassung dieser Frequenzen, was dem Fall der Homodyne-Detektion entspricht. Im Gegensatz zur Intradyne-Detektion, welche einen enormen Rechenaufwand zwecks Signalverarbeitung und Rückgewinnung des Informationssignals benötigen, ergeben sich aufgrund der attraktiven Eigenschaften der Homodyn-Detektion, die sonst nur mit komplexen Phasen-Regelschleifen, engl.: "Phase Locked Loop", zu erzielen sind, enorme Vorteile in Kosten- und Energieeffizienz bei der Implementierung einer Übertragungseinheit 10.

**Fig. 3** zeigt ein spektrales, optisches Frequenzdiagramm des Lichts S_{L} des Lasers 1 sowie des empfangenen optischen Signals S_{o,R} nach der Anpassung der Laserfrequenz f_{L} durch Injection Locking. Dies hat nunmehr den wesentlichen Vorteil, dass aufgrund der gleichen Frequenzen des Lichts S_{L} des Lasers 1 sowie des empfangenen, optischen Empfangssignals S_{o,R} eine Überlagerung stattfindet, bei der die im empfangenen, optischen Empfangssignal S_{o,R} enthaltenen Signale exakt im Basisband zu liegen kommen ("Homodyne-Detektion") und daher besonders leicht, also ohne zusätzliche digitale Signalverarbeitung zwecks Frequenzoffsetkorrektur, ausgelesen und im elektrischen Empfangssignal I_{R} besonders leicht identifiziert werden können.

Durch die Überlagerung des Lichts S_{L} des Lasers 1 sowie des empfangenen, optischen Empfangssignals S_{o,R} wird ein Stromsignal erstellt, das etwa proportional zum Produkt der Feldstärken des Lichts S_{L} und des Empfangssignals S_{o,R} ist. Aufgrund der Angleichung der Frequenz f_{L} des Lasers 1 an die Zentralfrequenz f_{R} des Empfangssignals S_{o,R} wird das vom Empfangssignal S_{o,R} erstellte Frequenzband in einen Frequenzbereich um 0 Hz abgebildet und landet daher im elektrischen Basisband (**Fig. 4**). Durch den Injection-Locking Effekt können je nach optischer Empfangsleistung die niedrigen Frequenzanteile unterdrückt werden. Durch geeignete senderseitige Kodierung des Empfangssignals S_{o,R} kann dies kompensiert werden, etwa durch Verwendung von Mittelwert-freien Kodes, wie zum Beispiel das Alternative-Mark-Inversion Kodierverfahren.

Die optischen Frequenzen liegen vorteilhafterweise im Bereich von 150-800 THz. Wird beispielsweise für die Datenübertragung rotes Licht verwendet, erhält man etwa eine typische Lichtfrequenz f_{L}, f_{R} von 430 THz. Fasergebundene optische Kommunikation bedient sich von Lichtfrequenzen um 190 THz, um minimalen Transmissionsverlusten ausgesetzt zu sein. Die Bandbreite des im optischen Signal Sₒ modulierten Signals kann - abhängig von der Anzahl der parallel gewählten optischen Trägerfrequenzen f_{L1}, f_{L2}, ... - etwa im Bereich von einigen GHz gewählt werden, aber in Zusammenhang mit breitbandigen Informationssignalen bis in den Bereich von typischerweise 100 GHz reichen.

Sofern über einen einzigen Lichtwellenleiter 3 mehrere optische Signale S_{o,1} S_{o,2} S_{o,3} mit mehreren Trägerfrequenzen übertragen werden sollen, sollten die Trägerfrequenzen f_{L,1} = |f_{R,1} - f_{L}| (mit f_{L} = f_{R,0} durch Injection Locking), f_{L,2}, f_{L,3} so weit beabstandet voneinander sein, dass die durch die Modulation verursachte Verbreitung des jeweiligen Bands nicht zu einem Übersprechen der Signale führt. Wird beispielsweise eine Übertragungsbandbreite von 6 GHz für das Informationssignal gewählt, wie dies bei neueren Mobilfunknetzen üblich ist, so können die einzelnen Trägerfrequenzen - unter Verwendung eines Sicherheitsbands zueinander und zusätzlicher Modulationstechnik, wie beispielsweise Einseitenbandmodulation oder komplexere Verfahren wie etwa orthogonales Frequenzmultiplexverfahren, dann mit etwa 10 GHz beabstandet sein, wie dies in **Fig. 5** dargestellt ist.

Besonders vorteilhaft ist es, das Licht S_{L} des Lasers 1 bei der Übertragung von Daten mit bereits modulierten elektrischen Signalen zu modulieren. So kann beispielsweise ein Datensignal, das über Mobilfunk übertragen werden soll, auf eine für den Mobilfunk typische elektrische Trägerfrequenz im Bereich von einigen GHz moduliert werden. Anschließend wird das so modulierte elektrische Signal als elektrisches Sendesignal U_{T} herangezogen und derart mittels einer in **Fig. 1** dargestellten Übertragungseinheit 10 ein optisches Signal S_{o,1} erstellt, das über einen Lichtwellenleiter 3 übertragen werden und von einer anderen, insbesondere ebenfalls einer in **Fig. 1** dargestellten, Übertragungseinheit 10 empfangen wird. Nach dem Empfang und der im Elektroabsorptionsmodulator 2 vorgenommenen Demodulation liegt ein dem elektrischen Sendesignal U_{T} entsprechendes Empfangssignal I_{R} vor, welches auf der exakt gleichen Trägerfrequenz zu liegen kommt, die für das Informationssignal vorgesehen war. Zu beachten ist, dass bei der empfangenden Übertragungseinheit 10 keine Notwendigkeit der elektrischen Modulation besteht, da das elektrische Signal bereits moduliert vorliegt. In diesem Zusammenhang können alternativ auch mehrere dieser Informationssignale auf dementsprechend mehreren eng-benachbarten Trägerfrequenzen gleichzeitig übertragen werden bzw. diese auch auf niedrigeren Zwischenfrequenzen, beispielsweise im Frequenzband von 0 bis 10 GHz, übertragen werden und anschließend auf sehr hohe Trägerfrequenzen, wie beispielsweise im Bereich von 60-80 GHz, transponiert werden. Dabei ergibt sich jeweils den Vorteil, dass die ursprünglich gewählten Trägerfrequenzen erhalten bleiben, da gemäß dem Verfahren kein Frequenzversatz bei der kohärentoptischen Detektion auftritt.

Im Folgenden wird nun anhand der **Fig. 1** eine Variante der Erfindung beschrieben, mit der gleichzeitig ein einlangendes, optisches Signal S_{o,R} empfangen werden kann, und mit der andererseits ein optisches Sendesignal S_{o,T} übertragen werden kann. Zum Zweck der Erstellung und Übermittlung des Sendesignals S_{o,T} setzt die Steuereinheit 5 die am elektrischen Modulationsanschluss 21 des Elektroabsorptionsmodulators 2 anliegende Spannung entsprechend den im Sendesignal S_{T} enthaltenen Daten auf einen vorgegebenen, durch ein elektrisches Spannungssignal festgelegten Wert.

Durch diese Maßnahme wird das vom Laser 1 abgegebene Licht S_{L} entsprechend dem elektrischen Sendesignal U_{T} abgeschwächt und tritt aus dem Elektroabsorptionsmodulator 2 als optisches Sendesignal S_{o,T} heraus.

Wie auch im ersten Ausführungsbeispiel der Erfindung wird der vom Elektroabsorptionsmodulator 2 aufgenommene Strom I_{R}, der bei Vorgabe des elektrischen Sendesignals U_{T} vom Elektroabsorptionsmodulator 2 sowie bei Bestrahlung mit dem einlangenden, optischen Empfangssignal S_{o,R} entsteht, gemessen.

Dadurch, dass das am optischen Anschluss 22 des Elektroabsorptionsmodulators 2 einlangende, optische Signal S_{o,R} jedoch Daten enthält, entsteht am elektrischen Modulationsanschluss 21 des Elektroabsorptionsmodulators 2 ein Strom, der von dem modellierten Stromverlauf I_{R,m} abweicht.

Um die Auswirkungen des optischen Empfangssignals S_{o,R} auf den Stromverlauf I_{R} isolieren zu können und die Einflüsse des elektrischen Sendesignals U_{T} auf den Stromverlauf zu ermitteln und zu eliminieren, wird derjenige zeitliche Stromverlauf I_{R,m} modelliert, der sich bei einer vorgegebenen Bestrahlung des Elektroabsorptionsmodulators 2 durch den Laser 1 und der vorgegebenen Signalbeaufschlagung am elektrischen Modulationsanschluss 21 des Elektroabsorptionsmodulators 2 ergibt, wenn über dem Lichtwellenleiter 3 kein optisches Empfangssignal S_{o,R} empfangen wird, oder ein optisches Empfangssignal S_{o,R} empfangen wird, das kein moduliertes Signal enthält. Dies kann durch Kalibrierung anhand bekannter optischer Eingangs- und Ausgangssignale erfolgen.

Anschließend wird die Differenz ΔI zwischen dem gemessenen Stromverlauf I_{R} und dem modellierten Stromverlauf I_{R,m} gebildet, was durch bekannte Signalverarbeitungsalgorithmen in der digitalen Ebene bzw. durch Hochfrequenz-Schaltungstechnik in der analogen Ebene bewerkstelligt werden kann. Diese Differenz ΔI wird nunmehr als vom optischen Empfangssignal S_{o,R} herrührend angenommen und als Empfangssignal S_{R} bereitgestellt oder für die Erstellung des Empfangssignals S_{R} verwendet. Mit dieser Maßnahme ist es möglich, diejenigen Einflüsse, die im Rahmen des Sendens des Sendesignals S_{T} erstehenden Einwirkungen auf den elektrischen Modulationsanschluss 21 des Elektroabsorptionsmodulators 2 fließenden Strom herauszurechnen und trotz der Beaufschlagung des Elektroabsorptionsmodulators 2 mit einem elektrischen Sendesignal U_{T} ein dem einlangenden, optischen Empfangssignal S_{o,R} entsprechendes Empfangssignal S_{R} zu erstellen. Damit ist es auch möglich, die vorliegende Anordnung im Voll-Duplexbetrieb zu betreiben.

Alternativ ist es natürlich möglich, die Übertragungseinheit 10 im allgemein bekannten Halb-Duplexbetrieb zu betreiben, sodass sich ein Sendesignal S_{T} und ein Empfangssignal S_{R} zeitlich nicht überlappen. Dabei wird zur Erstellung eines modulierten optischen Empfangssignals S_{o,R} Licht mit einer vorgegebenen optischen Frequenz f_{R} mit einem zu übertragenden Signal moduliert. Anschließend werden abwechselnd in hintereinanderfolgenden Zeitabschnitten jeweils ein Empfangsschritt und ein Sendeschritt vorgenommen.

Im Rahmen des Empfangsschritts innerhalb eines ersten Zeitabschnitts wird, wie vorstehend beschrieben, unter Einstellung der optischen Frequenz f_{L} des Lasers 1 auf die vorgegebene optische Frequenz f_{R} ein optisches Empfangssignal S_{o,R} empfangen und, wie vorstehend beschrieben, demoduliert und in ein elektrisches Empfangssignal I_{R} umgewandelt und von der Steuereinheit 5 weiter verarbeitet.

Im Rahmen eines anschließenden Sendeschritts innerhalb eines nachfolgenden zweiten Zeitabschnitts wird Licht S_{L} mit derselben vorgegebenen optischen Frequenz f_{L} vom Laser 1 auf den Elektroabsorptionsmodulator 2 abgegeben. Weiters wird ein zu übertragendes Sendesignal S_{T}, insbesondere in Form eines elektrischen Spannungssignals, am elektrischen Modulationsanschluss 21 des Elektroabsorptionsmodulators 2 wird. Dadurch wird erreicht, dass das durch den Elektroabsorptionsmodulator 2 hindurchgehende Licht entsprechend dem zu übertragenden Sendesignal S_{T} abgeschwächt wird und das derart abgeschwächte optische Sendesignal S_{o,T} in den Lichtwellenleiter 3 eingekoppelt und übertragen wird.

Eine weitere Alternative besteht in der Verwendung von Multiplexing, um das Sendesignal S_{T} und das Empfangssignal S_{R} im Voll-Duplexbetrieb entsprechend zu trennen. Ein attraktives Beispiel hierfür wäre das gängig verwendete Frequenz-Multiplexing, sodass Sende- und Empfangssignale S_{T}, S_{R} in unterschiedlichen elektrischen Frequenzbereichen, jedoch mit derselben optischen Trägerfrequenz, übertragen werden und ein Übersprechen durch Filterung unterdrückt werden kann.

Die im Rahmen des Frequenz-Multiplexing auftretenden Signale sind in den **Fig. 5a** und **Fig. 5b** näher dargestellt.

Im Rahmen des Frequenz-Multiplexing wird der Übertragungseinheit 10 ein optisches moduliertes Empfangssignal S_{o,1} zugeleitet, bei dessen Erstellung ein Datensignal D₁ mit einer vorgegebenen ersten elektrischen Frequenz f₁ moduliert wird. Man erhält dabei ein Signal S₁, das Frequenzanteile innerhalb des ersten Frequenzbereichs F_{el,1} um die vorgegebene elektrische Frequenz f_{el,1} aufweist. Das derart erhaltene Signal S₁ wird anschließend zur Modulation von Licht mit einer vorgegebenen optischen Frequenz f_{L} verwendet. Man erhält auf diese Weise ein optisches moduliertes Empfangssignal S_{o,R}.

Dieses Empfangssignal S_{o,1} wird, wie im Zusammenhang mit der ersten Ausführungsform der Erfindung beschrieben, unter Verwendung von Licht S_{L} mit der vorgegebenen optischen Frequenz f_{L} erhalten. Dabei wird ein elektrisches Empfangssignal I_{R} erhalten, das Frequenzanteile innerhalb eines vorgegebenen ersten elektrischen Frequenzbereichs F_{el,1} aufweist.

Gleichzeitig zum Empfang der Daten im ersten elektrischen Frequenzband F_{el,1} werden Daten im zweiten elektrischen Frequenzband F_{el,2} gesendet. Dabei wird ein elektrisches Sendesignal U_{T} verwendet, das Signalanteile innerhalb eines vom ersten Frequenzband F_{el,1} verschiedenen und mit diesem nicht überlappenden und von diesem beabstandeten, elektrischen Frequenzbands F_{el,2} aufweist. Dieses elektrische Sendesignal U_{T} kann durch Modulation eines Datensignals D₂ erstellt werden, wobei dasselbe elektrische Modulationsverfahren verwendet werden kann wie bei der Erstellung Signals S₁.

Das elektrische Sendesignal U_{T} wird an den Elektroabsorptionsmodulator 2 angelegt. Gleichzeitig wird mittels des Lasers 1 Licht S_{L} mit der vorgegebenen optischen Frequenz f_{L} auf den Elektroabsorptionsmodulator 2 abgegeben. Auf diese Weise wird das durch den Elektroabsorptionsmodulator 2 hindurchgehende Licht entsprechend dem zu übertragenden elektrischen Sendesignal U_{T} abgeschwächt und das derart erhaltene optische Sendesignal S_{o,T} in den Lichtwellenleiter 3 eingekoppelt und übertragen.

In **Fig. 6** ist eine bevorzugte zweite Ausführungsform der Erfindung dargestellt, die bevorzugt auf die Polarisation des über den Lichtwellenleiter 3 laufenden Lichts abgestimmt ist. Wesentlicher Hintergrund dieser Ausführungsform ist es, dass aufgrund physikalischer Einwirkungen auf den Lichtwellenleiter 3, insbesondere durch thermische Effekte oder mechanische Einflüsse, die Polarisation des über den Lichtwellenleiter 3 übermittelten Lichts S_{oR}, S_{o,T} zeitlichen Schwankungen unterliegt und für den gegenständlichen Fall der kohärenten optischen Detektion die Polarisationszustände von lokalem Licht S_{L} aus dem Laser 1 und einlangendem, zu empfangendem optischen Signal S_{o,R} idealerweise gleich sind. Zudem können durch die Abstimmung des einlangenden Polarisationszustandes den im Allgemeinen polarisationsselektiven Eigenschaften der verwendeten Elektroabsorptionsmodulatoren 2, 2' vorgebeugt werden. Im vorliegenden zweiten Ausführungsbeispiel der Erfindung findet sich ein Laser 1, der über einen elektrischen Eingang 11 verfügt und der einen optischen Laserausgang 12 aufweist, dem zwei Elektroabsorptionsmodulatoren 2, 2' nachgeschaltet sind. Die Ausbildung des Lasers 1 bzw. der Elektroabsorptionsmodulatoren 2, 2' entspricht vorzugsweise der Ausbildung des Lasers 1 und des Elektroabsorptionsmodulators 2 im ersten Ausführungsbeispiel der Erfindung. Wie auch im ersten Ausführungsbeispiel der Erfindung wird vom Laser 1 erstelltes Licht S_{L} an beide Elektroabsorptionsmodulatoren 2, 2' weitergeleitet. Beide elektrischen Modulationsanschlüsse 21, 21' der beiden Elektroabsorptionsmodulatoren 2, 2' sind zu einer gemeinsamen Steuereinheit 5 geführt. Darüber hinaus ist die Steuereinheit 5, wie auch im ersten Ausführungsbeispiel der Erfindung, an den elektrischen Eingang 11 des Lasers 1 angeschlossen, der der Steuerung der Frequenz f_{L} des Lichts S_{L} dient.

Die beiden optischen Anschlüsse 22, 22' der Elektroabsorptionsmodulatoren 2, 2' sind an die beiden Polarisationseingänge 41, 41' eines Polarisationsstrahlteilers 4 angeschlossen. Der gemeinsame Ausgang 42 des Polarisationsstrahlteilers 4 ist in den Lichtwellenleiter 3 eingekoppelt. Die grundsätzliche Funktionalität der in Fig. 2 dargestellten Übertragungseinheit 10 entspricht der in Fig. 1 dargestellten Übertragungseinheit 10. Natürlich können die beiden Elektroabsorptionsmodulatoren 2, 2' ebenso durch zwei separate Laser 1, 1' gespeist werden, die sich gemäß der zuvor beschriebenen Methode des Injection Locking an die einlangende optische Frequenz f_{R} des empfangenen optischen Signals S_{o,R} anpassen. In der Regel wird man sich jedoch der photonischen Integration bedienen, um die Vorrichtung wie in Fig. 6 mit nur einem Laser 1 zu bewerkstelligen.

Eine wesentliche Besonderheit besteht im vorliegenden Fall darin, dass das empfangene optische Signal S_{o,R} unabhängig von seiner Polarisierung empfangen werden kann, wobei abhängig vom Polarisationszustand des einlangenden optischen Empfangssignals S_{o,R} von den beiden Elektroabsorptionsmodulatoren 2, 2' ein elektrisches Empfangssignal I_{R}, I_{R}' erstellt wird. Das elektrische Empfangssignal I_{R}, das am elektrischen Modulationsanschluss 21 des ersten Elektroabsorptionsmodulators 2 anliegt, hängt seiner Größe nach davon ab, wie stark das einlangende, optische Empfangssignal S_{o,R} nach der Polarisationsrichtung des ersten Polarisationseingangs 41 des Polarisationsstrahlteilers 4 ausgerichtet ist. Das elektrische Empfangssignal I_{R}', das am elektrischen Modulationsanschluss 21' des zweiten Elektroabsorptionsmodulators 2' anliegt, hängt seiner Größe nach davon ab, wie stark das einlangende, optische Empfangssignal S_{o,R} nach der Polarisationsrichtung des zweiten Polarisationseingangs 41' des Polarisationsstrahlteilers 4 ausgerichtet ist.

Langt nun ein optisches Empfangssignal S_{o,R} ein, das im Wesentlichen nach der ersten Polarisationsrichtung polarisiert ist, so finden sich von dem Signal herrührende Signalanteile im Wesentlichen im elektrischen Empfangssignal I_{R}, das am elektrischen Modulationsanschluss 21 des ersten Elektroabsorptionsmodulators 2 anliegt. Langt hingegen ein optisches Empfangssignal S_{o,R} ein, das im Wesentlichen nach der zweiten Polarisationsrichtung polarisiert ist, so finden sich von dem Signal herrührende Signalanteile im Wesentlichen im elektrischen Empfangssignal I_{R}', das am elektrischen Modulationsanschluss 21' des zweiten Elektroabsorptionsmodulators 2' anliegt. Durch Verwendung eines Polarisationsstrahlteilers 4, welcher orthogonale Polarisationsrichtungen an die beiden Elektroabsorptionsmodulatoren 2, 2' leitet, kann somit unabhängig vom einlangenden Polarisationszustand des Lichts stets ein Signal empfangen werden, welches im ungünstigsten Fall lediglich um einen bekannten Faktor von etwa 0.5 von zumindest einem der Elektroabsorptionsmodulatoren abgeschwächt empfangen wird.

Die Steuereinheit 5 bestimmt in weiterer Folge, welches der beiden elektrischen Empfangssignale I_{R}, I_{R}' größer ist bzw. die größere Signalenergie oder Signalstärke aufweist und zieht jeweils das Empfangssignale I_{R}, I_{R}' mit der größeren Signalenergie oder Signalstärke für die Erstellung des Empfangssignals S_{R} heran.

Bei der in **Fig. 6** dargestellten Ausführungsform besteht nunmehr die Möglichkeit, einen der beiden Elektroabsorptionsmodulatoren 2, 2' zum Versenden von Signalen zu verwenden. Wird in einem der beiden Elektroabsorptionsmodulatoren 2, 2' die größere Signalstärke oder Signalenergie festgestellt, so wird jeweils der andere Elektroabsorptionsmodulator 2, 2' zum Versenden von Signalen herangezogen. Die Steuereinheit 5, die bereits festgestellt hat, in welchem der beiden Elektroabsorptionsmodulatoren 2, 2' die größere Signalstärke oder Signalenergie vorliegt, wählt zum Versenden des zu übertragenden Sendesignals S_{T} jeweils den Elektroabsorptionsmodulator 2, 2' aus, von dem die jeweils schwächere Signalenergie oder Signalstärke ausgeht und legt an den elektrischen Modulationsanschluss 21, 21' dieses Elektroabsorptionsmodulators 2, 2' ein elektrisches Sendesignal U_{T} an, das dem Sendesignal S_{T} entspricht. Aufgrund dieses elektrischen Sendesignals U_{T} wird der betreffende Elektroabsorptionsmodulator 2, 2' dazu veranlasst, ein optisches Sendesignal S_{o,T} zu erstellen, das in einem der beiden Polarisationseingänge 41, 41' des Polarisationsteilers 4 eingekoppelt wird und demgemäß am Ausgang 42 des Polarisationsteilers 4 vorliegt und in den Lichtwellenleiter 3 eingekoppelt wird.

Natürlich ist es gemäß der zuvor beschriebenen Funktion der Vorrichtung ebenso möglich, beide Elektroabsorptionsmodulatoren 2, 2' in Sendefunktion oder in Empfangsfunktion zu betreiben bzw. die Funktionen der Elektroabsorptionsmodulatoren 2, 2' zeitlich zu ändern. Dadurch ist es möglich, die Datenrate flexibel an die jeweilige Situation in Bezug auf den benötigten Datendurchsatz anzupassen. Im Fall, dass beide Elektroabsorptionsmodulatoren 2, 2' in Empfangsfunktion betrieben werden, kann ebenso das im Allgemeinen bekannte Polarisations-Multiplexing verwendet werden, um den Datendurchsatz zu erhöhen.

Eine weitere bevorzugte Ausführungsform der Erfindung, die einen Einsatz im Mobilfunk ermöglicht, ist in den **Fig. 7 bis 9** näher dargestellt. **Fig. 7** zeigt dabei ein Datenübertragungsnetzwerk 40 für den Mobilfunk im Überblick. Mit einer solchen Ausführungsform ist ein Verfahren zum Übertragen von Signalen von einem Zentralknoten 30 zu einem mit einer Mobilfunkantenne 24a, 24b, 24c versehenen und vom Zentralknoten 30 entfernt angeordneten Antennenknoten 20a, 20b, 20c vorgesehen. Im Mobilfunk besteht grundsätzlich die Aufgabe, einem entfernt angeordneten Mobilfunkgerät 6a, 6b, 6c, das jeweils über eine Sende- und Empfangsantenne 61a, 61b, 61c verfügt, mit einem Datennetz 34 in Datenkommunikation zu bringen. Dies kann beispielsweise zur Übertragung von Gesprächen oder von Daten erfolgen.

Welche Daten vom Netzwerk 34 an die einzelnen Mobilfunkgeräte 6a, 6b, 6c weitergeleitet werden, ist nur von geringer Bedeutung, da die Datenübertragung letztlich in den meisten Fällen in Form eines modulierten Signals erfolgt. Im Folgenden werden nunmehr zunächst die Datenübertragung von einem Netzwerk 34 zu einem Mobilfunkgerät 6a, 6b, 6c sowie die Datenübertragung von einem Mobilfunkgerät 6a, 6b, 6c zum Datenübertragungsnetzwerk 34 näher beschrieben.

Zunächst werden vom Datenübertragungsnetzwerk 34 Daten D₁ an den Zentralknoten 30 übertragen (**Fig. 8**). Im Zentralknoten 30 werden die Daten D₁ von einer Datenvermittlungseinheit 36 empfangen, wobei die Daten D₁ an einen Datenanschluss 36a, 36b, 36c der Datenvermittlungseinheit 36 übertragen werden. Der Zentralknoten 30 verfügt über einen Oszillator 37, der an die Vermittlungseinheit 36 unterschiedliche Frequenzsignale f₁, f₂ mit jeweils unterschiedlicher Frequenz übermittelt. Diese Frequenzsignale f₁, f₂ langen bei der Vermittlungseinheit 36 an den dafür vorgesehenen Frequenzeingängen 36f₁, 36f₂ ein. Ein derartiger Oszillator 37 erstellt zur Datenübertragung ein Frequenzsignal, dessen Frequenz über die Zeit sehr stabil ist und keinen Frequenzschwankungen unterliegt. Da die Erstellung eines solchen Frequenzsignals stark temperaturabhängig ist, ist die Bereitstellung eines stabilen Oszillators 37 nur mit großem Aufwand und Kosten möglich.

Demgemäß ist es von Vorteil, dass sich ein solcher Oszillator 37 im Zentralknoten 30 befindet, und nicht an den mit dem Zentralknoten 30 in Verbindung stehenden, jedoch entfernt angeordneten Antennenknoten 20a, 20b, 20c. Gerade wenn ein Zentralknoten 30 mit einer großen Anzahl von Antennenknoten 20a, 20b, 20c in Datenkommunikation steht, ist es von Vorteil, wenn lediglich ein einziger zentraler Oszillator 37 verwendet wird. Dieser kann insbesondere in einem klimatisierten Serverraum angeordnet sein, um Schwankungen zu vermeiden. Ebenso kann zur Einsparung von Kosten aufgrund dieser Konsolidierung von technologischen Funktionen in einem Zentralknoten 30 ein qualitativ hochwertigerer, zentralisierter Oszillator 37 eingesetzt werden.

Sind, wie dies noch gezeigt wird, im Bereich der Antennenknoten keine Oszillatoren 37 erforderlich, so entfällt auch die Notwendigkeit, an einzelnen Mobilfunkstandorten bzw. Antennenknoten 20a, 20b, 20c eine entsprechende Klimatisierung zur Herstellung eines Oszillators 37 zur Verfügung zu stellen, wodurch große Kosteneinsparungen erreicht werden können.

Die einzelnen, vom Oszillator 37 erstellten Frequenzsignale f₁, f₂ werden der Datenvermittlungseinheit 36 zugeführt. Diese ermittelt, abhängig von der für den Mobilfunk benötigten Frequenz sowie von der im Datenpaket D₁ angegebenen Empfängerangabe, diejenige Frequenz, die für die Übertragung an den Empfänger benötigt wird, sowie denjenigen Antennenknoten 20a, 20b, 20c bzw. Mobilfunkstandort, an dem der Empfänger des betreffenden Datensignals D₁ erreichbar ist.

Im vorliegenden Fall wählt die Datenvermittlungseinheit 36 das Frequenzsignal f₂ zur Modulation des Datensignals D₁ und überträgt diese Daten über den Modulationsanschluss 360a an eine zentrale Übertragungseinheit 310a. Die Datenvermittlungseinheit 36 weist darüber hinaus noch zwei weitere zentrale Übertragungseinheiten 310a, 310b, 310c auf, die mit jeweils einem Anschluss 360a, 360b, 360c der Datenvermittlungseinheit 36 angeschlossen sind. Im vorliegenden Ausführungsbeispiel handelt es sich bei den von der Datenvermittlungseinheit 36 über die Modulationsanschlüsse 360a, 360b, 360c an die zentralen Übertragungseinheiten 310a, 310b, 310c abgegebenen Signale um elektrische Signale S₁, S₂. Diese werden im vorliegenden Fall von der Datenvermittlungseinheit 36 erstellt, indem das vorgegebene Datensignal D₁ mit einer vorgegebenen Frequenz f₂ moduliert wird. Die vorgegebene Frequenz f₂ entspricht im vorliegenden Fall derjenigen Frequenz, mit der das Signal letztlich von der Mobilfunkantenne 24a des Antennenknotens 20a abgestrahlt und an das für den Empfang bestimmte Mobilfunkgerät 6a übertragen werden soll. Von der Datenvermittlungseinheit 36 wird zu diesem Zweck ein moduliertes Sendesignal S₁ erstellt, das an den Signalanschluss 351a der ersten zentralen Übertragungseinheit 310a übertragen wird. Im vorliegenden Ausführungsbeispiel entspricht die zentrale Übertragungseinheit 310a der in **Fig. 1** dargestellten Übertragungseinheit 10. Auch die beiden übrigen zentralen Übertragungseinheiten 310b, 310c entsprechen der in **Fig. 1** dargestellten Übertragungseinheit.

Aufgrund des von der Datenvermittlungseinheit 36 erstellten Signals S₁ erstellt die erste zentrale Übertragungseinheit 310a an ihrem optischen Anschluss 322a ein moduliertes, optisches Sendesignal S_{o,1}, das über einen Lichtwellenleiter 3a an den Antennenknoten 20a übermittelt wird. Das heißt, dass eine analog-optische Transmission des Signals S₁ erfolgt.

Der Antennenknoten 20a ist im Detail in **Fig. 9** näher dargestellt, insbesondere ist dargestellt, dass das eben erwähnte optische Sendesignal S_{o,1} über den Lichtwellenleiter 3a an den Antennenknoten 20a übertragen wird. Der Antennenknoten 20a umfasst eine Übertragungseinheit 210a mit einem optischen Anschluss 222a, in den der Lichtwellenleiter 3a eingekoppelt ist und über den das optische, modulierte Signal S_{o,1} an die Übertragungseinheit 210a gelangt. Die Übertragungseinheit 210a entspricht im Wesentlichen der in **Fig. 1** dargestellten Übertragungseinheit 10 und stellt an ihrem Signalanschluss 251a ein Signal S₁^{∼} zur Verfügung, das an einen Antennenverstärker 23a weitergeleitet und von einer Mobilfunkantenne 24a abgestrahlt wird. Das abgestrahlte Signal wird vom Mobilfunkgerät 6a über die Antenne 61a empfangen, demoduliert und weiterverarbeitet.

Dadurch, dass das optische Signal S_{o,1} bereits mit einem modulierten elektrischen Signal S₁ moduliert wurde, das heißt, dass sich das Informationssignal bereits in modulierter Form auf einer elektrischen Trägerfrequenz befindet, erhält man im Antennenknoten 20a nach der optischen Demodulation im Elektroabsorptionsmodulators 2 ein elektrisches moduliertes Empfangssignal I_{R} (**Fig. 1**) bzw ein moduliertes Empfangssignal S₁^{∼} am Signalanschluss 251a der Übertragungseinheit 210a. Da dieses Signal bereits in modulierter Form vorliegt, braucht ein separater Oszillator 37 nicht vorgesehen sein. Viel mehr ist es möglich, das bereits zuvor im Zentralknoten 30 modulierte Signal S₁, das im Zentralknoten 30 noch in ein optisches Signal S_{o,1} umgewandelt wurde, im Antennenknoten 20a wieder in ein elektrisches Signal S₁^{∼} umzuwandeln, das an die Mobilfunkantenne 24a zur Abstrahlung weiterübermittelt wird. Es ist somit auch kein Digital-Analog Wandler notwendig, welcher im Fall von digital-optischer Transmission notwendig wäre, um das Signal S₁ in ein Mobilfunk-taugliches Signal S₁^{∼} zu konvertieren.

In weiterer Folge wird nunmehr erläutert, wie ein vom Mobilfunkgerät 6a über dessen Antenne 61a abgestrahltes Signal von einem Antennenknoten 20a empfangen und über den Zentralknoten 30 an das Datennetz 34 übermittelt wird. Das bei der Mobilfunkantenne 24a einlangende Signal wird im Verstärker 23a verstärkt und als Sendesignal S₂^{∼} an den Signalanschluss 251a der Übertragungseinheit 210a weitergeleitet. Die Übertragungseinheit 210a erstellt aufgrund des Sendesignals S₂^{∼} an ihrem optischen Anschluss 22a ein Signal S_{o,2}, das über den Lichtwellenleiter 3a an den Zentralknoten 30 weitergeleitet wird. Im Zentralknoten 30 ist der Lichtwellenleiter 3a, wie bereits erwähnt, an den optischen Anschluss 322a der ersten zentralen Übertragungseinheit 310a angeschlossen. Am Signalanschluss 351a der ersten zentralen Übertragungseinheit 310a des Zentralknotens 30 liegt ein Signal S₂, im vorliegenden ein moduliertes, elektrisches Signal S₂, an, das an den ersten Modulationsanschluss 360a der Datenvermittlungseinheit 36 geführt ist. Die Datenvermittlungseinheit 36 demoduliert das am ersten Modulationsanschluss 360a anliegende Signal S₂ unter Verwendung der vom Oszillator 37 erstellten zweiten Frequenz f₂, die am Frequenzanschluss 36f₂ der Datenvermittlungseinheit 36 anliegt. Das aufgrund der Demodulation des Signals S₂ erstellte Datensignal S₂ wird am Ausgang der Datenvermittlungseinheit 36 bereitgehalten und als Datensignals D₂ an das Datennetzwerk 34 übermittelt.

Auch für die Übertragung von modulierten Signalen von Mobilfunkgerät 6a, 6b, 6c in das Datennetzwerk 34 ist es nicht erforderlich, dass sich im Antennenknoten 20a, 20b, 20c ein Oszillator 37 befindet. Das Mobilfunkgerät 6a verfügt über einen Oszillator 37 und übermittelt elektromagnetische Signale mit einer vorgegebenen Frequenz an die Mobilfunkantenne 24a. Weiters wird das so empfangene Signal im Verstärker 23a verstärkt und von der Mobilfunksende- und -empfangseinrichtung 210a in ein optisches Signal S_{o,2} umgewandelt. Es ist im Antennenknoten 20a, 20b, 20c nicht erforderlich, das vom Mobilfunkgerät 6a, 6b, 6c empfangene Signal S₂^{∼} überhaupt zu demodulieren. Viel mehr wird das empfangene Signal einfach in ein optisches Signal S_{o,2} umgewandelt und zur weiteren Verarbeitung an den Zentralknoten 30 übermittelt.

Diese Methode für die analoge Übermittlung von modulierten Mobilfunksignalen über optische Lichtwellenleiter 3 geht davon aus, dass die Modulations- bzw. Empfangsbandbreite der Übertragungseinheiten 210,310 größer ist als die elektrische Trägerfrequenz der modulierten Mobilfunksignale S₁,S₁^{∼},S₂,S₂^{∼}. Für den besonderen Fall, dass sehr hohe Trägerfrequenzen jenseits von typischen elektro-optischen Bandbreiten von Elektroabsorptionsmodulatoren 2 verwendet werden, wie dies etwa in neuen Mobilfunkstandards, wie beispielsweise 5G angedacht ist, kann die Übertragung der Mobilfunksignale in modulierter Form wie zuvor beschrieben nun auf einer "Zwischen"-Frequenz erfolgen. Eine anschließende Frequenzumsetzung der Signale S₁,S₁^{∼},S₂,S₂^{∼} durch Frequenzmischung mit einer vordefinierten, aus einem lokalen elektrischen Oszillator 37 stammenden Frequenz, kann das empfangene, modulierte Signal S₁,S₁^{∼},S₂,S₂^{∼} dann auf die gewünschte hohe Trägerfrequenz transponiert werden. Eine solche Frequenzumsetzung ist allgemein bekannt und auch für derartige Zwecke in Verwendung.

Eine weitere Ausführungsform der Erfindung, mit der eine Vielzahl von Übertragungseinheiten 10a, ..., 10f in einem Datenaustauschnetzwerk 70 miteinander verkoppelt werden können, ist in **Fig. 10** dargestellt. Dieses umfasst eine Vielzahl von erfindungsgemäßen Übertragungseinheiten 10a, ..., 10f, die jeweils über einen Lichtwellenleiter 3a, ..., 3f in eine zentrale optische Schnittstelle 7 eingekoppelt sind. Dabei ist jeweils ein Lichtwellenleiter 3a, ..., 3f vorgesehen, der jeweils in einen Anschluss 22a, ..., 22f einer Übertragungseinheit 10a, ..., 10f und einen Anschluss 71a, ..., 71f der zentralen Schnittstelle 7 eingekoppelt ist.

Die zentrale optische Schnittstelle 7 kann in der einfachsten Ausführung ein passiver optischer Koppler in NxN Konfiguration sein, wobei N die Anzahl der Anschlüsse am bidirektionalen Ein- und Ausgang dieses passiven Leistungsteilers ist. Im Fall von Fig. 10 wäre N = 3. Zudem kann eine interne Rückkopplung an den Koppleranschlüssen der zentralen optischen Schnittstelle erfolgen, um Signale künstlich wieder an dieselbe Seite des Kopplers zu transferieren. So ist es etwa möglich, dass auch Übertragungseinheiten 10a, 10b und 10c miteinander kommunizieren können.

Im vorliegenden Datenaustauschnetzwerk 70 ist es auf einfache Weise möglich, dass einzelne der hier dargestellten Übertragungseinheit 10a, ..., 10f miteinander dadurch in Datenverbindung treten, dass sie eine gemeinsame optische Sende- und Empfangsfrequenz vereinbaren, wobei insbesondere jeder Übertragungseinheit 10a, ..., 10f jeweils eine Sende- und Empfangsfrequenz zugeordnet ist, unter der diese angesprochen werden kann. Will nun beispielsweise eine Übertragungseinheit 10e mit einer anderen Übertragungseinheit 10a in Datenkommunikation treten, so kann diese beispielsweise die Frequenz ihres Lasers 1e auf eine Frequenz einstellen, die im Wesentlichen der optischen Frequenz des Lasers 1a der Übertragungseinheit 10a entspricht und dementsprechend an die Übertragungseinheit 10a Daten übertragen.

Um hier eine vorteilhafte Datenkommunikation zu gewährleisten, kann auch vorgesehen sein, dass sämtliche Sende- und Empfangsfrequenzen, die den einzelnen Übertragungseinheiten 10a, ..., 10f zugewiesen sind, allen übrigen Übertragungseinheiten 10a, ..., 10f bekannt und bei diesen hinterlegt sind. Als Antwort kann beispielsweise die Übertragungseinheit 10a unter Beibehaltung ihrer eigenen Sendefrequenz eine Antwort an die die Kommunikation initiierende Übertragungseinheit 10e zurück übermitteln.

Die übrigen Übertragungseinheiten können ihren Laser 1b, 1c, 1d, 1f dabei ebenfalls auf die Frequenz der ersten Übertragungseinheit 10a setzen, sämtliche Kommunikation zwischen den Sende- und Empfangvorrichtungen 10a, 10e mitlesen, das heißt, dass Information im Punkt-zu-Mehrpunkt Verfahren ausgetauscht werden kann. Gegebenenfalls können weitere Nachrichten an diese beiden Übertragungseinheiten 10a, 10e übermittelt werden.

Darüber hinaus ist es aber möglich, dass parallel zur Kommunikation der beiden Übertragungseinheiten 10a, 10e beispielsweise auch die Übertragungseinheiten 10b, 10d miteinander in Datenverbindung treten und eine abweichende optische Sende- und Empfangsfrequenz wählen. Die Wahl der einzelnen optischen Sende- und Empfangsfrequenzen kann zur Vermeidung von Übersprechen wie in **Fig. 5** dargestellt gewählt werden.

Dabei kann beispielsweise von der Übertragungseinheit 10b eine Frequenz für die Aufnahme der Kommunikation mit Übertragungseinheit 10d gewählt werden, der der Übertragungseinheit 10d zugewiesenen Frequenz entspricht. In diesem Fall ist es möglich, dass die Übertragungseinheiten 10a, 10e sowie die Übertragungseinheiten 10b, 10d miteinander in Datenkommunikation treten, ohne die jeweils anderen Übertragungseinheiten 10a, ..., 10f zu stören.

Übertragungsfrequenzen können elektrisch aber auch optisch festgelegt werden. Während auf einer optischen Frequenz gemäß dem Frequenz-Multiplex mehrere elektrische Trägerfrequenzen definiert werden können, so können ebenso mehrere optische Frequenzen durch Verstimmung der Emissionswellenlänge des Lasers 1 genutzt werden, was bei Lasern 1 im allgemeinen über den Laserstrom I_{L} oder die Temperatur bewerkstelligt werden kann. Dadurch ergibt sich generell bereits die Möglichkeit, eine Vielzahl von möglichen Übertragungskanälen zu bewerkstelligen. Die Erkennung des zu selektierenden Kanals kann durch charakteristische Pilottöne, die anhand einer jeder Übertragungseinheit bekannten, fix vorgegebenen und hinterlegten Definition der jeweiligen optischen Frequenz zum Beispiel bei sehr niedrigen Frequenzen im Kilohertz-Bereich beaufschlagt sind, erfolgen. Elektrisches Frequenz-Multiplexing eignet sich hier besonders für bereits modulierte Signale, während sich exklusive optische Frequenzen besonders für die Übertragung des Informationssignals im Basisband, das heißt ohne vorherige elektrische Modulation auf eine elektrische Trägerfrequenz anbieten.

## Patentansprüche

1. Verfahren zum Empfangen eines modulierten, insbesondere amplitudenmodulierten, vorzugsweise durch Modulation von Licht (S_{L}) eines Lasers (1) erstellten, optischen Empfangssignals (S_{o,R}),
- mit einer Übertragungseinheit (10) umfassend einen Laser (1) mit einem elektrischen Eingang (11) zur Steuerung des Laserstroms (I_{L}) sowie der Frequenz des vom Laser (1) abgegebenen Lichts (S_{L}), wobei der Laser (1) einen optischen Laserausgang (12) aufweist, sowie einen dem optischen Laserausgang (12) nachgeschalteten Elektroabsorptionsmodulator (2), der einen elektrischen Modulationsanschluss (21) aufweist,
- wobei der Laser (1) auf den Elektroabsorptionsmodulator (2) gerichtet wird und das Licht (S_{L}) des Lasers (1) durch den Elektroabsorptionsmodulator (2) hindurch geleitet wird und an einem optischen Anschluss (22) des Elektroabsorptionsmodulators (2) in einen Lichtwellenleiter (3) eingekoppelt wird,
**dadurch gekennzeichnet,**
- **dass** das empfangene optische Empfangssignal (S_{o,R}), mit einer optischen Frequenz innerhalb eines vorgegebenen optischen Frequenzbereichs über den Lichtwellenleiter (3) durch den Elektroabsorptionsmodulator (2) hindurch auf den Laser (1) gerichtet wird,
- **dass** der Laser (1) durch Ansteuerung des elektrischen Eingangs (11) auf eine vorgegebene optische Frequenz (f_{L}) voreingestellt wird, die innerhalb eines optischen Frequenzbereichs (F), der insbesondere innerhalb von +/- 1 GHz um die optische Frequenz (f_{R}) des empfangenen optischen Empfangssignals (S_{o,R}) liegt,
- **dass** aufgrund der Einstrahlung des optischen Empfangssignals (S_{o,R}) auf den Laser (1) die optische Frequenz (f_{L}) des vom Laser (1) abgestrahlten Lichts (S_{L}) an die optische Frequenz (f_{R}) des empfangenen optischen Empfangssignals (S_{o,R}) angepasst und/oder angeglichen wird,
- **dass** das vom Laser (1) abgestrahlte Licht (S_{L}) und das über den Lichtwellenleiter (3) empfangene optische Empfangssignal (S_{o,R}) im Elektroabsorptionsmodulator (2) überlagert werden, dass das derart erstellte Überlagerungssignal vom Elektroabsorptionsmodulator (2) in ein elektrisches Empfangssignal (I_{R}), insbesondere in ein elektrisches Stromsignal (I_{R}), umgewandelt wird, das vorzugsweise dem Stromverlauf (I_{R}) am elektrischen Modulationsanschluss (21) des Elektroabsorptionsmodulators (2) entspricht, und
- ein Empfangssignal (S_{R}) zur Verfügung gestellt wird, das dem elektrischen Empfangssignal (I_{R}) entspricht oder von diesem abgeleitet ist, und an einem Signalanschluss (51), insbesondere als Strom- oder Spannungssignal, zur Verfügung gehalten wird.

2. Verfahren nach Anspruch 1 zum gleichzeitigen Senden und Empfangen von optischen Signalen (S_{o,R}, S_{o,T}), **dadurch gekennzeichnet,**
a) **dass** ein zu übertragendes Sendesignal (S_{T}) als elektrisches Sendesignal (U_{T}), insbesondere als elektrisches Spannungssignal, zur Verfügung gestellt wird,
b) **dass** das elektrische Sendesignal (U_{T}) als Spannungssignal während des Empfangs gemäß Anspruch 1 an den Modulationsanschluss (21) des Elektroabsorptionsmodulators (2) angelegt wird und derart durch Modulation des vom Laser (1) erzeugten Lichts (S_{L}) ein optisches Sendesignal (S_{o,T}) erstellt in den Lichtwellenleiter (3) eingekoppelt wird,
c) **dass** der vom Elektroabsorptionsmodulator (2) aufgenommene Strom ermittelt und derart ein Stromsignal (I_{R}) erstellt wird, der bei Vorgabe dieses elektrischen Sendesignals (U_{T}) vom Elektroabsorptionsmodulator (2) aufgenommen wird,
d) **dass** aufgrund von vorgegebenen Kriterien derjenige zeitliche Stromverlauf (I_{R,m}) modelliert wird, der sich bei einer vorgegebenen Bestrahlung des Elektroabsorptionsmodulators (2) durch das Licht (S_{L}) des Lasers (1) und einer vorgegebenen Signalbeaufschlagung mit dem elektrischen Sendesignal (U_{T}) am elektrischen Modulationsanschluss (21) des Elektroabsorptionsmodulators (2) ergibt, wenn über den Lichtwellenleiter (3) kein optisches Empfangssignal (S_{o,R}) empfangen wird oder ein optisches Empfangssignal (S_{o,R}) empfangen wird, das kein moduliertes Signal enthält, und dieser Stromverlauf als modellierter Stromverlauf (I_{R,m}) zur Verfügung gehalten wird,
e) **dass** die Differenz (ΔI) zwischen dem in Schritt c) gemessenen Stromverlauf (I_{R}) und dem in Schritt d) modellierten Stromverlauf (I_{R,m}) gebildet wird, und
f) **dass** diese Differenz (ΔI) als vom optischen Empfangssignal (S_{o,R}) herrührend angenommen und als Empfangssignal (S_{R}) bereitgestellt wird.

3. Verfahren nach Anspruch 1 oder 2, **dadurch gekennzeichnet,**
- **dass** das Licht (S_{L}) des Lasers (1) zusätzlich auf einen weiteren Elektroabsorptionsmodulator (2') gerichtet wird,
- **dass** die optischen Anschlüsse (22, 22') der beiden Elektroabsorptionsmodulatoren (2, 2') an jeweils einen der beiden Polarisationseingänge (41, 41') eines Polarisationsstrahlteilers (4) angeschlossen werden und der Ausgang (42) des Polarisationsstrahlteilers (4) mit dem Lichtwellenleiter (3) gekoppelt wird,
- **dass** mit beiden Elektroabsorptionsmodulatoren (2, 2') jeweils ein elektrisches Empfangssignal (I_{R}, I_{R}') ermittelt wird, wobei das elektrische Empfangssignal (I_{R}, I_{R}') mit der höheren Signalstärke als Empfangssignal (S_{R}) zur Verfügung gehalten wird.

4. Verfahren nach Anspruch 3 zum gleichzeitigen Senden und Empfangen von optischen Signalen (S_{o,R}, S_{o,T}), **dadurch gekennzeichnet, dass** derjenige Elektroabsorptionsmodulator (2, 2') für das Versenden des optischen Sendesignals (S_{o,T}) herangezogen wird, an dem das jeweils schwächere elektrische Empfangssignal (I_{R}, I_{R}') ermittelt wurde,
wobei insbesondere das zu übertragende Sendesignal (S_{T}), vorzugsweise in Form eines elektrischen Spannungssignals, an den Modulationsanschluss (21, 21') desjenigen Elektroabsorptionsmodulators (2, 2') angelegt wird, an dem das jeweils schwächere elektrische Empfangssignal (I_{R}, I_{R}') ermittelt wird.

5. Verfahren nach einem der vorangehenden Ansprüche zum Empfangen und Versenden von optischen modulierten Signalen (S_{o,R}, S_{o,T}), **dadurch gekennzeichnet,**
- **dass** zur Erstellung eines modulierten optischen Empfangssignals (S_{o,R}) Licht (S_{L}) mit einer vorgegebenen optischen Frequenz (f_{R}) mit einem zu übertragenden Signal (S₁) moduliert wird, und
- **dass** abwechselnd in hintereinanderfolgenden Zeitabschnitten
- Signale mit dem Verfahren des Anspruchs 1 empfangen werden, wobei die optische Frequenz (f_{L}) des Lasers (1) auf die vorgegebene optische Frequenz (f_{R}) eingestellt wird, und
- anschließend im jeweils nachfolgenden Zeitabschnitt Licht (S_{L}) mit derselben vorgegebenen optischen Frequenz (f_{R}) vom Laser (1) auf den Elektroabsorptionsmodulator (2) abgegeben wird und ein zu übertragendes Sendesignal (S_{T}), insbesondere in Form eines elektrischen Spannungssignals, am elektrischen Modulationsanschluss (21) des Elektroabsorptionsmodulators (2) vorgegeben wird, sodass das durch den Elektroabsorptionsmodulator (2) hindurchgehende Licht (S_{L}) entsprechend dem zu übertragenden Sendesignal (S_{T}) abgeschwächt wird und das derart erhaltene optische Sendesignal (S_{o,T}) in den Lichtwellenleiter (3) eingekoppelt und übertragen wird.

6. Verfahren nach einem der vorangehenden Ansprüche zum Empfangen und Versenden von optischen modulierten Signalen (S_{o,1}, S_{o,2}), **dadurch gekennzeichnet,**
- **dass** zur Erstellung des Empfangssignals (S_{o,1}, S_{o,R}) ein Datensignal (D₁, D₂) mit einer vorgegebenen ersten elektrischen Frequenz moduliert wird, sodass es Frequenzanteile innerhalb ersten Frequenzbereichs (F_{el,1}) um die vorgegebene elektrische Frequenz (f_{el,1}) aufweist und das derart erhaltene Signal (S₁) anschließend zur Modulation von Licht mit einer vorgegebenen optischen Frequenz verwendet wird und derart ein optisches moduliertes Empfangssignal (S_{o,1}, S_{o,R}) erhalten wird,
- **dass** dieses Empfangssignal (S_{o,1}, S_{o,R}) mit dem Verfahren des Anspruchs 1 unter Verwendung von Licht (S_{L}) mit der vorgegebenen optischen Frequenz erhalten wird und derart ein elektrisches Empfangssignal (I_{R}) erhalten wird, das Frequenzanteile innerhalb eines vorgegebenen ersten elektrischen Frequenzbereichs (F_{el,1}) aufweist, und
- gleichzeitig ein elektrisches Sendesignal (U_{T}), das Signalanteile innerhalb eines vom ersten Frequenzband verschiedenen und mit diesem nicht überlappenden, vorzugsweise von diesem beabstandeten, elektrischen Frequenzbands (F_{el,2}) aufweist, an den Elektroabsorptionsmodulator (2) angelegt wird und mittels des Lasers (1) Licht (S_{L}) mit der vorgegebenen optischen Frequenz auf den Elektroabsorptionsmodulator (2) abgegeben wird,
- sodass das durch den Elektroabsorptionsmodulator (2) hindurchgehende Licht entsprechend dem zu übertragenden Sendesignal (S_{T}) abgeschwächt wird und das derart erhaltene optische Sendesignal (S_{o,T}) in den Lichtwellenleiter (3) eingekoppelt und übertragen wird.

7. Verfahren zum Übertragen von Signalen von einem Zentralknoten (30) zu einem mit einer Antenne (24a, 24b, 24c), vorzugsweise Mobilfunkantenne, versehenen, vom Zentralknoten (30) entfernt angeordneten, Antennenknoten (20a, 20b, 20c),
- wobei ein, insbesondere zuvor über ein Datennetz (34) empfangenes, Datensignal (D₁) im Zentralknoten (30) bereitgestellt wird und anschließend mit zumindest einer von einem Oszillator (37) vorgegebenen Frequenz (f₁, f₂) moduliert wird und derart ein moduliertes elektrisches Signal (I₁) erstellt wird,
- wobei mittels einer zentralen Übertragungseinheit (310a, 310b, 310c) aufgrund des modulierten, elektrischen Signals (I₁) ein optisches, moduliertes Signal (S_{o,1}) bereitgestellt und in den Lichtwellenleiter (3) eingekoppelt und einen der Antennenknoten (20a, 20b, 20c) übertragen wird,
- wobei aufgrund des so erstellten optischen Signals (S_{o,1}) im Antennenknoten (20a, 20b, 20c) mit dem Verfahren eines der Ansprüche 1 bis 6 ein Empfangssignal (S₁^{∼}) mittels einer antennenseitigen Übertragungseinheit (210a, 210b, 210c) ermittelt und am Signalanschluss (251a, 251b, 251c) der antennenseitigen Übertragungseinheit (210a, 210b, 210c) bereitgestellt wird, und
- wobei das Empfangssignal (S₁^{∼}), gegebenenfalls verstärkt, vorzugsweise in Form eines Strom- oder Spannungssignals, an die Antenne (24a, 24b, 24c) des Antennenknotens (20a, 20b, 20c) übertragen wird und von dieser abgestrahlt wird.

8. Verfahren nach Anspruch 7, **dadurch gekennzeichnet,**
- **dass** von der Antenne (24a, 24b, 24c) des Antennenknotens (20a, 20b, 20c) einlangende modulierte, elektromagnetische Signale, insbesondere Mobilfunksignale, empfangen und, gegebenenfalls verstärkt, an den Signalanschluss (251a, 251b, 251c) der antennenseitigen Übertragungseinheit (210a, 210b, 210c) des Antennenknotens (20a, 20b, 20c) weitergeleitet werden, und von der antennenseitigen Übertragungseinheit (210a, 210b, 210c) nach einem der vorangehenden Ansprüche ein optisches Signal (S₂) erstellt und über den Lichtwellenleiter (3) an den Zentralknoten (30) übertragen wird,
- **dass** dieses optische Signal (S₂) im Zentralknoten (30) empfangen und insbesondere nach einem der vorangehenden Ansprüche, mittels der zentralen Übertragungseinheit (310a, 310b, 310c), in ein elektrisches Signal (I₂) umgewandelt wird,
- **dass** dieses elektrische Signal (I₂) unter Verwendung einer vom Oszillator (37) vorgegebenen Frequenz (f₁, f₂) demoduliert wird und das derart demodulierte Datensignal (D₂) im Zentralknoten (30) zur Verfügung gehalten und gegebenenfalls über das Datennetz (34) weiter übermittelt wird.

9. Übertragungseinheit (10), insbesondere zur Durchführung eines Verfahrens nach einem der vorangehenden Ansprüche, umfassend
- einen Laser (1) mit einem elektrischen Eingang (11) und einem optischen Laserausgang (12),
- zumindest einen dem optischen Laserausgang (12) des Lasers (1) nachgeschalteten Elektroabsorptionsmodulator (2) mit einem elektrischen Modulationsanschluss (21) und einem optischen Anschluss (22) zur optischen Ankopplung des Elektroabsorptionsmodulators (2) an einen Lichtwellenleiter (3),
wobei der Laser (1) derart auf den optischen Anschluss (22) des Elektroabsorptionsmodulators (2) ausgerichtet und positioniert ist, dass das Licht (S_{L}) des Lasers (1) am optischen Anschluss (22) aus dem Elektroabsorptionsmodulator (2) austritt und dass vom am optischen Anschluss (22) aus auf den Elektroabsorptionsmodulator (2) eintreffendes Licht auf den Laser (1) gerichtet ist,
wobei der Elektroabsorptionsmodulator (2) dazu ausgebildet ist, vom Laser (1) abgestrahltes Licht (S_{L}) und ein am optischen Anschluss (22) einlangendes optisches Empfangssignal (S_{o,R}) zu überlagern, und an seinem elektrischen Modulationsanschluss (21) ein elektrisches Empfangssignal (I_{R}) bereitzuhalten, das einem Überlagerungssignal des vom Laser (1) abgestrahlten Lichts (S_{L}) und des optischen Empfangssignals (S_{o,R}) entspricht,
- eine mit dem elektrischen Eingang (11) des Lasers (1) und dem elektrischen Modulationsanschluss (21) des Elektroabsorptionsmodulators (2) verbundene Steuereinheit (5) mit einem elektrischen Signalanschluss (51), wobei die Steuereinheit (5) dazu ausgebildet ist,
- den Laserstrom (I_{L}) sowie die Frequenz des vom Laser (1) abgegebenen Lichts (S_{L}) über den elektrischen Eingang (11) des Lasers (1) auf einen Wert innerhalb eines optischen Frequenzbereichs festzulegen, der insbesondere im Bereich von +/- 1 GHz um die Wellenlänge des im Lichtwellenleiter (3) geführten Lichts oder um die optische Frequenz (f_{R}) des empfangenen optischen Empfangssignals (S_{o,R}) liegt, und
- das elektrische Empfangssignal (I_{R}) am elektrischen Modulationsanschluss (21) des Elektroabsorptionsmodulators (2) zu analysieren und derart ein dem am optischen Anschluss (22) einlangenden optischen Empfangssignal (S_{o,R}) entsprechendes Empfangssignal (S_{R}) zur Verfügung zu halten.

10. Übertragungseinheit (10) nach Anspruch 9 zum gleichzeitigen Senden und Empfangen von optischen Signalen (S_{o,R}, S_{o,T}), **dadurch gekennzeichnet, dass** die Steuereinheit (5) ferner dazu ausgebildet ist,
- basierend auf dem an ihrem Signalanschluss (51) anliegenden, zu übertragenden Sendesignal (S_{T}) als elektrisches Sendesignal (U_{T}) zu erstellen während des Empfangs von Signalen an den Modulationsanschluss (21) des Elektroabsorptionsmodulators (2) anzulegen,
- den vom Elektroabsorptionsmodulator (2) aufgenommen Strom zu ermitteln und derart ein Stromsignal (I_{R}) zu erstellen,
- aufgrund von vorgegebenen Kriterien denjenigen zeitlichen Stromverlauf zu modellieren, der sich bei einer vorgegebenen Bestrahlung des Elektroabsorptionsmodulators (2) durch das Licht (S_{L}) des Lasers (1) und einer vorgegebenen Signalbeaufschlagung am elektrischen Modulationsanschluss (21) des Elektroabsorptionsmodulators (2) ergibt, wenn über den Lichtwellenleiter kein optisches Empfangssignal (S_{o,R}) einlangt oder ein optisches Empfangssignal (S_{o,R}) einlangt, das kein moduliertes Signal enthält, und dieser Stromverlauf als modellierten Stromverlauf (I_{R,m}) zur Verfügung zu halten,
- die Differenz (ΔI) zwischen dem gemessenen Stromverlauf (I_{R}) und dem modellierten Stromverlauf (I_{R,m}) zu bilden, und diese Differenz oder einen davon abgeleiteten Signalverlauf als Empfangssignal (S_{R}) bereitzustellen.

11. Übertragungseinheit (10) nach Anspruch 9 oder 10, **dadurch gekennzeichnet,**
- **dass** ein weiterer Elektroabsorptionsmodulator (2') vorgesehen ist, auf den das Licht (S_{L}) des Lasers (1) gerichtet ist,
- **dass** die optischen Anschlüsse (22, 22') der beiden Elektroabsorptionsmodulatoren (2, 2') an jeweils einen der beiden Polarisationseingänge (41, 41') eines Polarisationsstrahlteilers (4) angeschlossen sind und der Ausgang (42) des Polarisationsstrahlteilers (4) mit dem Lichtwellenleiter (3) gekoppelt ist,
- **dass** beide Elektroabsorptionsmodulatoren (2, 2') jeweils dazu ausgebildet sind, an ihrem elektrischen Modulationsanschluss (21) ein elektrisches Empfangssignal (I_{R}, I_{R}') zu ermitteln, und
- **dass** die Steuereinheit (5) dazu ausgebildet ist, dasjenige elektrisches Empfangssignal (I_{R}, I_{R}') mit der höheren Signalstärke als Empfangssignal (S_{R}) an ihrem Signalanschluss (51) zur Verfügung zu halten.

12. Übertragungseinheit (10) nach Anspruch 11 zum gleichzeitigen Senden und Empfangen von elektrischen Signalen (S_{o,R}, S_{o,T}), **dadurch gekennzeichnet, dass** die Steuereinheit (5) dazu ausgebildet ist, denjenigen Elektroabsorptionsmodulator (2, 2') für das Versenden des optischen Sendesignals (S_{o,T}) auszuwählen, an dem sie das jeweils schwächere elektrische Empfangssignal (I_{R}, I_{R}') ermittelt hat, wobei sie das zu übertragende Sendesignal (S_{T}), insbesondere in Form eines elektrischen Spannungssignals, an den Modulationsanschluss (21, 21') desjenigen Elektroabsorptionsmodulators (2, 2') anlegt, an dem sie das jeweils schwächere elektrische Empfangssignal (I_{R}, I_{R}') ermittelt hat.

13. Zentralknoten (30) umfassend
- eine Datenvermittlungseinheit (36) mit zumindest einem Datenanschluss (36a) zum Anschluss an ein Datennetz (34), zumindest einem Modulationsanschluss (360a, 360b, 360c) und zumindest einem Frequenzeingang (36f₁, 36f₂),
- einen mit dem Frequenzeingang (36f₁, 36f₂) verbundenen Oszillator (37), wobei der Oszillator (37) zur Erstellung von Frequenzsignalen (f₁, f₂) nach vorgegebenen Kriterien und zur Übermittelung der Frequenzsignalen (f₁, f₂) an den Frequenzeingang (36f₁, 36f₂) ausgebildet ist, und
- zumindest eine zentrale Übertragungseinheit (310a, 310b, 310c) nach einem der Ansprüche 9 bis 12, wobei der Signalanschluss (351a, 351b, 351c) der zentralen Übertragungseinheit (310a, 310b, 310c) mit einem Modulationsanschluss (360a, 360b, 360c) der Datenvermittlungseinheit (36) verbunden ist und ein Lichtwellenleiter (3) in den optischen Anschluss (322a, 322b, 322c) der zentralen Übertragungseinheit (310a, 310b, 310c) eingekoppelt ist,
wobei die Datenvermittlungseinheit (36) dazu ausgebildet ist,
- ein über das Datennetz (34) am Datenanschluss (36a) einlangendes Datensignal (D₁) nach einem vorgegebenen Modulationsverfahren auf zumindest ein vom Oszillator (37) an den Frequenzeingang (36f₁, 36f₂) übermitteltes Frequenzsignal (f₁, f₂) aufzumodulieren und am Modulationsanschluss (360a. 360b, 360c) als moduliertes Sendesignal (S₁) bereitzustellen und nach vorgegebenen Kriterien an die entsprechende zentrale Übertragungseinheit (310a, 310b, 310c) zu übermitteln und
- ein über den Modulationsanschluss (360a. 360b, 360c) von der zentralen Übertragungseinheit (310a. 310b, 310c) einlangendes Empfangssignal (S₂) nach einem vorgegebenen Demodulationsverfahren mittels eines vom Oszillator (37) vorgegebenen Frequenzsignals (f₁, f₂) zu demodulieren und am ersten elektrischen Datenanschluss (36a) als demoduliertes Datensignal bereitzustellen und an das Datennetz (34) weiterzuleiten.

14. Zentralknoten (30) nach Anspruch 13, wobei die zentrale Übertragungseinheit (310a, 310b, 310c) vorzugsweise dazu ausgebildet ist,
- mittels eines Lasers (1) Licht (S_{L}) zu erstellen und auf einen Elektroabsorptionsmodulator (2) zu richten und derart
- ein am Signalanschluss (351a, 351b, 351c) der zentralen Übertragungseinheit (310a, 310b, 310c) von der Datenvermittlungseinheit (36) einlangendes Sendesignal (S₁) als moduliertes optisches Sendesignal (S_{o,1}) am optischen Anschluss (322a, 322b, 322c) bereitzustellen, in den Lichtwellenleiter (3) einzukoppeln, *und insbesondere an einen Antennenknoten (20a, 20b, 20c) zu übertragen,* und
- ein, *insbesondere von einem Antennenknoten (20),* über den Lichtwellenleiter (3) am optischen Anschluss (322a, 322b, 322c) einlangendes optisches Empfangssignal (S_{o,2}) als Empfangssignal (S₂) am Signalanschluss (351a, 351b, 351c) zur Verfügung zu stellen und an die Datenvermittlungseinheit (36) zu übermitteln.

15. Antennenknoten (20a, 20b, 20c) zur drahtlosen Übertragung von Daten an ein Mobilfunkgerät (6a, 6b, 6c) mit einer Antenne (61a, 61b, 61c), insbesondere Mobilfunkantenne, umfassend
- eine Mobilfunkantenne (24a, 24b, 24c), wobei die Mobilfunkantenne (24a, 24b, 24c) dazu ausgebildet ist, mit dem Mobilfunkgerät (6a, 6b, 6c) in Funkverbindung zu treten,
- zumindest eine antennenseitige Übertragungseinheit (210a, 210b, 210c) nach einem der Ansprüche 9 bis 12, deren Signalanschluss an die Antenne (61a, 61b, 61c) angeschlossen ist, und
- einen mit dem optischen Anschluss (222a, 222b, 222c) der antennenseitigen Übertragungseinheit (210a, 210b, 210c) verbundenen Lichtwellenleiter (3).

16. Antennenknoten (20a, 20b, 20c) nach Anspruch 15, wobei die antennenseitige Übertragungseinheit (210a, 210b, 210c) insbesondere dazu ausgebildet ist, mittels eines Lasers (1) Licht (S_{L}) zu erstellen und auf einen Elektroabsorptionsmodulator (2) zu richten und derart
- ein an ihrem Signalanschluss (251a, 251b, 251c) vom Verstärker (23) einlangendes Signal (S₂^{∼}) als moduliertes optisches Signal (S₂) am optischen Anschluss (222a, 222b, 222c) bereitzustellen, in den Lichtwellenleiter (3) einzukoppeln, und insbesondere an einen Zentralknoten (30) zu übertragen, und
- ein, insbesondere von einem Zentralknoten (30), über den Lichtwellenleiter (3) am optischen Anschluss (222a, 222b, 222c) einlangendes optisches Signal (S₁) als Sendesignal (S₁^{∼}) am Signalanschluss (251a, 251b, 251c) zur Verfügung zu stellen und über den bidirektionalen Verstärker (23) an die Mobilfunkantenne (24a, 24b, 24c) zu übermitteln.

17. Antennenknoten (20a, 20b, 20c) nach Anspruch 15 oder 16, ferner umfassend einen an die Mobilfunkantenne (24a, 24b, 24c) angeschlossenen bidirektionalen Verstärker (23a, 23b, 23c)
- der an den Signalanschluss (251a, 251b, 251c) der antennenseitigen Übertragungseinheit (210a, 210b, 210c) angeschlossen ist, und
- der dazu ausgebildet ist,
- die von der Mobilfunkantenne (24a, 24b, 24c) aufgenommenen Daten zu verstärken und als elektrisches Empfangssignal (S₂^{∼}) an den Signalanschluss (251a, 251b, 251c) der antennenseitigen Übertragungseinheit (210a, 210b, 210c) weiterzuleiten, und
- von der antennenseitigen Übertragungseinheit (210a, 210b, 210c) an ihrem Signalanschluss (251a, 251b, 251c) bereitgestellte Signale (S₁^{∼}) zu verstärken und an die Mobilfunkantenne (24a, 24b, 24c) zur Übermittlung weiterzuleiten.

18. Datenübertragungsnetzwerk (40) umfassend
- einen Zentralknoten (30) nach Anspruch 13 oder 14 und
- eine Vielzahl von Antennenknoten (20a, 20b, 20c) nach Anspruch 15, 16 oder 17, wobei jeweils der optische Anschluss (222a, 222b, 222c) der antennenseitigen Übertragungseinheit (210a, 210b, 210c) des Antennenknotens (20a, 20b, 20c) und der optische Anschluss (322a, 322b, 322c) der zentralen Übertragungseinheiten (310a, 310b, 310c) des Zentralknotens (30) miteinander über jeweils einen Lichtwellenleiter (3a, 3b, 3c) verbunden sind, und
wobei vorzugsweise zumindest eine mit der Mobilfunkantennen (24a, 24b, 24c) in Funkverbindung stehendes, Mobilfunkgerät (6a, 6b, 6c).

19. Datenaustauschnetzwerk (70) zur Datenübermittlung, umfassend
- eine zentrale Schnittstelle (7) mit Anschlüssen (71a, 71b, 71c) und
- eine Vielzahl von Übertragungseinheiten (10a, 10b, 10c) nach einem der Ansprüche 9 bis 12, wobei der jeweilige optische Anschluss (22a, ..., 22f) der einzelnen Übertragungseinheiten (10a, ..., 10f) jeweils mit einem Anschluss (71a, ..., 71f) der Schnittstelle (7) mittels eines Lichtwellenleiters (3a, ..., 3f) verbunden ist,
- wobei die Schnittstelle (7) dazu ausgebildet ist, bei ihr über einen der Lichtwellenleiter einlangende, optische Signale (Sₒ) zu verteilen und an die übrigen Übertragungseinheiten (10a, ..., 10f) weiterzuleiten,
- wobei jeder Übertragungseinheit (10a, 10b, 10c) zumindest eine Sende- und Empfangsfrequenz zugeordnet ist und wobei in der jeweiligen Steuereinheit (5) jeder der Übertragungseinheiten (10a, ..., 10f) jeweils die den Sende- und Empfangsfrequenzen zugeordneten Übertragungseinheiten (10a, ..., 10f) hinterlegt sind, und
- wobei die Steuereinheiten (5) der Übertragungseinheiten (10a, ..., 10f) dazu ausgebildet sind, im Fall der Datenübertragung ihren Laser (1) durch Ansteuerung des jeweiligen elektrischen Eingangs (11) auf eine optische Frequenz (f_{L}) einzustellen, die sich in einem optischen Frequenzbereich (F), insbesondere von +/- 1 GHz um die optische Frequenz der für den Empfang ausgewählten Übertragungseinheit (10a, ..., 10f), befindet.

## Claims

1. Method for receiving a modulated, in particular amplitude-modulated, optical reception signal (S_{o,R}), preferably generated by modulation of light (S_{L}) of a laser (1),
- with a transmission unit (10) comprising a laser (1) with an electrical input (11) for control of the laser beam (I_{L}) as well as the frequency of the light (S_{L}) emitted from the laser (1), the laser (1) having an optical laser output (12), as well as, downstream of the laser output (12), an electro-absorption modulator (2), which has an electrical modulation terminal (21),
- wherein the laser (1) is directed at the electro-absorption modulator (2) and the light (S_{L}) of the laser (1) is guided through the electro-absorption modulator (2) and coupled into an optical waveguide (3) at an optical terminal (22) of the electro-absorption modulator (2),
**characterised in that**
- the received optical reception signal (S_{o,R}), with an optical frequency within a specified optical frequency range, is directed via the optical waveguide (3) through the electro-absorption modulator (2) onto the laser (1),
- by driving the electrical input (11), the laser (1) is pre-set to a specified optical frequency (f_{L}), which lies within an optical frequency range (F), which in particular is within +/- 1 GHz around the optical frequency (f_{R}) of the received optical reception signal (S_{o,R}),
- on the basis of the irradiation of the optical reception signal (S_{o,R}) onto the laser (1), the optical frequency (f_{L}) of the light emitted by the laser (1) is adapted and/or matched to the optical frequency (f_{R}) of the received optical reception signal (S_{o,R}),
- the light (S_{L}) emitted from the laser (1) and the optical reception signal (S_{o,R}) received via the optical waveguide (3) are superimposed in the electro-absorption modulator (2), the superposition signal thus generated is converted into an electrical reception signal (I_{R}), in particular into an electrical current signal (I_{R}), that preferably corresponds to the current flow (I_{R}) at the electrical modulation terminal (21) of the electro-absorption modulator (2), and
- a reception signal (S_{R}) is made available, which corresponds to the electrical reception signal (I_{R}) or is derived therefrom, and is kept available at a signal terminal (51), in particular as a current or voltage signal.

2. Method according to claim 1, for simultaneous sending and receiving of optical signals (S_{o,R}, S_{o,T}), **characterised in that**
a) a send signal (S_{T}) that is to be transmitted is made available as an electrical send signal (U_{T}), in particular as an electrical voltage signal,
b) the electrical send signal (U_{T}) is applied to the modulation terminal (21) of the electro-absorption modulator (2) as a voltage signal during the receiving according to claim 1 and **in that** way an optical send signal (S_{o,T}) is generated by modulation of the light (S_{L}) produced by the laser (1) coupled into the optical waveguide (3),
c) the current drawn by the electro-absorption modulator (2) is detected and **in that** way a current signal (I_{R}) is generated, which is drawn from the electro-absorption modulator (2) when this electrical send signal (U_{T}) is specified,
d) on the basis of specified criteria, the current curve (I_{R,m}) over time is modelled, which results from a specified irradiation of the electro-absorption modulator (2) by the light (S_{L}) of the laser (1) and a specified signal application with the electrical send signal (U_{T}) at the electrical modulation terminal (21) of the electro-absorption modulator (2), if no optical reception signal (S_{o,R}) is received via the optical waveguide (3) or an optical reception signal (S_{o,R}) containing no modulated signal is received, and this current curve is kept available as a modelled current curve (I_{R,m}),
e) the difference (Δl) between the current curve (I_{R}) measured in step c) and the current curve (I_{R,m}) modelled in step d) is formed, and
f) this difference (Δl) is assumed to result from the optical reception signal (S_{o,R}) and is provided as the reception signal (S_{R}).

3. Method according to claim 1 or 2, **characterised in that**
- the light (S_{L}) of the laser (1) is directed additionally at a further electro-absorption modulator (2'),
- the optical terminals (22, 22') of the two electro-absorption modulators (2, 2') are each coupled to one of the two polarisation inputs (41, 41') of a polarisation beam splitter (4), and the output (42) of the polarisation beam splitter (4) is coupled to the optical waveguide (3),
- an electrical reception signal (I_{R}, I_{R}') is detected with each of the two electro-absorption modulators (2, 2'), the electrical reception signal (I_{R}, I_{R}') with the greater signal intensity being kept available as the reception signal (S_{R}).

4. Method according to claim 3 for simultaneous sending and receiving of optical signals (S_{o,R}, S_{o,T}), **characterised in that** the electro-absorption modulator (2, 2') at which a respectively weaker electrical reception signal (I_{R}, I_{R}') is detected is employed for transmitting the optical transmission signal (S_{o,T}),
wherein in particular the send signal (S_{T}) that is to be transmitted, preferably in the form of an electrical voltage signal, is applied to the modulation terminal (21, 21') of the electro-absorption modulator (2, 2') at which the respectively weaker electrical reception signal (I_{R}, I_{R}') is detected.

5. Method according to any one of the preceding claims for receiving and transmitting optically modulated signals (S_{o,R}, S_{o,T}), **characterised in that**
- to generate a modulated optical reception signal (S_{o,R}), light (S_{L}) with a specified optical frequency (f_{R}) is modulated with a signal (S₁) that is to be transmitted, and
- alternately in time intervals that follow each other
- signals are received with the method of claim 1, the optical frequency (f_{L}) of the laser (1) being adjusted to the specified optical frequency (f_{R}), and
- then in each subsequent time interval light (S_{L}) with the same specified optical frequency (f_{R}) is emitted from the laser (1) onto the electro-absorption modulator (2) and a send signal (S_{T}) that is to be transmitted, in particular in the form of an electrical voltage signal, is specified at the electrical modulation terminal (21) of the electro-absorption modulator (2), in such a way that light (S_{L}) that passes through the electro-absorption modulator (2) is attenuated in accordance with the send signal (S_{T}) that is to be transmitted, and the optical send signal (S_{o,T}) thereby obtained is coupled into the optical waveguide (3) and transmitted.

6. Method according to any one of the preceding claims for receiving and transmitting optically modulated signals (S_{o,1}, S_{o,2}), **characterised in that**
- to generate the reception signal (S_{o,1}, S_{o,2}), a data signal (Di, D₂) with a specified first electrical frequency is modulated, in such a way that it has frequency components within a first frequency range (F_{el,1}) around the specified electrical frequency (f_{el,1}), and the signal (S₁) obtained **in that** way is then used for modulation of light with a specified optical frequency and **in that** way an optically modulated reception signal (S_{o,1}, S_{o,2}) is obtained,
- this reception signal (S_{o,1}, S_{o,R}) is obtained with the method of claim 1 using light (S_{L}) with the specified optical frequency and **in that** way an electrical reception signal (I_{R}) is obtained, which has frequency components within a specified first electrical frequency range (F_{el,1}), and
- simultaneously an electrical send signal (U_{T}), which has signal components within an electrical frequency band (F_{el,2}), which differs from and does not overlap with, preferably being spaced from, the first frequency band, is applied to the electro-absorption modulator (2) and by means of the laser (1) light (S_{L}) with the specified optical frequency is emitted to the electro-absorption modulator (2),
- so that the light passing through the electro-absorption modulator (2) is attenuated in accordance with the send signal (S_{T}) that is to be transmitted and the optical send signal (S_{o,T}) obtained **in that** way is coupled into the optical waveguide (3) and transmitted.

7. Method for transmitting signals from a central node (30) to an antenna node (20a, 20b, 20c) provided with an antenna (24a, 24b, 24c), preferably a mobile communications antenna, and arranged remotely from the central node (30),
- wherein a data signal (D₁), in particular a data signal previously received via a data network (34), is provided in the central node (30) and then modulated with at least one frequency (f₁, f₂) specified by an oscillator (37) and in that way a modulated electrical signal (I₁) is generated,
- wherein an optical modulated signal (S_{o,1}) is provided by means of a central transmission unit (310a, 310b, 310c) on the basis of the modulated electrical signal (I₁) and is coupled into the optical waveguide (3) and transmitted to one of the antenna nodes (20a, 20b, 20c),
- wherein on the basis of the optical signal (S_{o,1}) so generated, in the antenna nodes (20a, 20b, 20c) a reception signal (S₁^{∼}) is generated with the method of one of claims 1 to 6 by means of an antenna-side transmission unit (210a, 210b, 210c) and is provided at the signal terminal (251a, 251b, 251c) of the antenna-side transmission unit (210a, 210b, 210c), and
- wherein the reception signal (S₁^{∼}), amplified where necessary, preferably in the form of a current or voltage signal, is transmitted to the antenna (24a, 24b, 24c) of the antenna node (20a, 20b, 20c) and emitted therefrom.

8. Method according to claim 7, **characterised in that**
- modulated electromagnetic signals, in particular mobile communications signals, coming in from the antenna (24a, 24b, 24c) of the antenna nodes (20a, 20b, 20c), received and where necessary amplified, are forwarded to the signal terminal (251a, 251b, 251c) of the antenna-side transmission unit (210a, 210b, 210c) of the antenna node (20a, 20b, 20c), and an optical signal (S₂) is generated by the antenna-side transmission unit (210a, 210b, 210c) according to any one of the preceding claims and transmitted to the central node (30) via the optical waveguide (3),
- this optical signal (S₂) is received at the central node (30) and, in particular according to any one of the preceding claims, is converted to an electrical signal (I₂) by means of the central transmission unit (310a, 310b, 310c),
- this electrical signal (I₂) is demodulated using a frequency (f₁, f₂) specified by the oscillator (37) and the data signal demodulated **in that** way (D₂) is kept available in the central node (30) and, where necessary, further transmitted over the data network (34).

9. Transmission unit (10), in particular for carrying out a method according to any one of the preceding claims, comprising
- a laser (1) with an electrical input (11) and an optical laser output (12),
- at least one electro-absorption modulator (2) connected downstream of the optical laser output (12) of the laser (1) with an electrical modulation terminal (21) and an optical terminal (22) for optical coupling of the electro-absorption modulator (2) to an optical waveguide (3),
wherein the laser (1) is positioned and directed at the optical terminal (22) of the electro-absorption modulator (2) in such a way that the light (S_{L}) of the laser (1) emerges from the electro-absorption modulator (2) at the optical terminal (22) and that light incident on the electro-absorption modulator (2) from the optical terminal (22) is directed at the laser (1),
wherein the electro-absorption modulator (2) is configured to superimpose light (S_{L}) emitted from the laser (1) and an optical reception signal (S_{o,R}) arriving at the optical terminal (22), and to keep available at its electrical modulation terminal (21) an electrical reception signal (I_{R}), which corresponds to a superposition signal of the light (S_{L}) emitted from the laser (1) and the optical reception signal (S_{o,R}),
- a controller (5) that is connected to the electrical input (11) of the laser (1) and with the electrical modulation terminal (21) of the electro-absorption modulator (2) and that has an electrical signal terminal (51), wherein the controller (5) is configured
- to set the laser current (I_{L}) and the frequency of the light (S_{L}) emitted from the laser (1) via the electrical input (11) of the laser (1) to a value within an optical frequency range, which in particular is in the range of +/-1 GHz around the wavelength of the light guided in the optical waveguide (3) or around the optical frequency (f_{R}) of the received optical reception signal (S_{o,R}), and
- to analyse the electrical reception signal (I_{R}) at the electrical modulation terminal (21) and in that way to keep available a reception signal (S_{R}) corresponding to the optical reception signal (S_{o,R}) arriving at the optical terminal (22).

10. Transmission unit (10) according to claim 9 for simultaneous sending and receiving of optical signals (S_{o,R}, S_{o,T}), **characterised in that** the controller (5) is further configured
- to generate an electrical send signal (U_{T}) based on the send signal (S_{T}) that is to be transmitted and which is applied to its signal terminal (51) during the reception of signals at the modulation terminal (21) of the electro-absorption modulator (2) to apply,
- to detect the current drawn by the electro-absorption modulator (2) and **in that** way to generate a current signal (I_{R}),
- to model, on the basis of specified criteria, the current curve over time, which results from a specified irradiation of the electro-absorption modulator (2) by the light (S_{L}) of the laser (1) and a specified signal application at the electrical modulation terminal (21) of the electro-absorption modulator (2), if no optical reception signal (S_{o,R}) arrives via the optical waveguide or an optical reception signal (S_{o,R}) containing no modulated signal arrives, and to keep this current curve available as a modelled current curve (I_{R,m}),
- to form the difference (ΔI) between the measured current curve (I_{R}) and the modelled current curve (I_{R,m}), and to provide this difference, or a signal curve derived therefrom, as a reception signal (S_{R}).

11. Transmission unit (10) according to claim 9 or 10, **characterised in that**
- a further electro-absorption modulator (2') is provided, at which the light (S_{L}) of the laser (1) is directed,
- the optical terminals (22, 22') of the two electro-absorption modulators (2, 2') are connected to the respective two polarisation inputs (41, 41') of a polarisation beam splitter (4) and the output (42) of the polarisation beam splitter (4) is coupled to the optical waveguide (3),
- the two electro-absorption modulators (2, 2') are each configured to detect an electrical reception signal (I_{R}, I_{R}') at its electrical modulation terminal (21),
- the controller (5) is configured to keep available the electrical reception signal (I_{R}, I_{R}') with the greater signal intensity as reception signal (S_{R}) at its signal terminal (51).

12. Transmission unit (10) according to claim 11, for simultaneous sending and receiving optical signals (S_{o,R}, S_{o,T}), **characterised in that** the controller (5) is configured to select the electro-absorption modulator (2) for transmitting the optical send signal (S_{o,T}), at which it has detected the respective weaker electrical reception signal (I_{R}, I_{R}'), wherein it applies the send signal (S_{T}) that is to be sent, in particular in the form of an electrical voltage signal, to the modulation terminal (21, 21') of the electro-absorption modulator (2) at which it has detected the respectively weaker electrical reception signal (I_{R}, I_{R}').

13. Central node (30), comprising
- a data relaying unit (36) with at least one data terminal (36a) for connection to a data network (34), at least one modulation terminal (360a, 360b, 360c) and at least one frequency input (36f₁, 36f₂),
- an oscillator (37) connected to the frequency input (36f₁, 36f₂), wherein the oscillator (37) is configured to generate frequency signals (f₁, f₂) in accordance with specified criteria and to transmit the frequency signals (f₁, f₂) to the frequency input (36f₁, 36f₂), and
- at least one transmission unit (310a, 310b, 310c) according to any one of claims 9 to 12, wherein the signal terminal (351a, 351b, 351c) of the central transmission unit (310a, 310b, 310c) is connected to a modulation terminal (360a, 360b, 360c) of the data relaying unit (36), and an optical waveguide (3) is coupled into the optical terminal (322a, 322b, 322c) of the central transmission unit (310a, 310b, 310c),
wherein the data relaying unit (36) is configured
- to modulate a data signal (D₁) arriving via the data network (34) at the data terminal (36a) onto at least one frequency signal (f₁, f₂) delivered by the oscillator (37) at the frequency input (36f₁, 36f₂) according to a specified modulation method, and to make it available as a modulated send signal (S₁) at the modulation terminal (360a, 360b, 360c) and in accordance with specified criteria to deliver it to the corresponding central transmission unit (310a, 310b, 310c), and
- to demodulate a reception signal (S₂) arriving via the modulation terminal (360a, 360b, 360c) from the central transmission unit (310a, 310b, 310c) in accordance with a specified demodulation method by way of a frequency signal (f₁, f₂) specified by the oscillator (37), and to provide it as a demodulated data signal at the first electrical data terminal (36a) and to forward it to the data network (36).

14. Central node (30) according to claim 13, wherein the central transmission unit (310a, 310b, 310c) is preferably configured
- by means of a laser (1) to generate light (S_{L}) and direct it at an electro-absorption modulator (2) and in that way
- to provide a send signal (S_{o,1}) arriving at a signal terminal (351a, 351b, 351c) of the central transmission unit (310a, 310b, 310c) from the data relaying unit (36) as a modulated optical send signal (S_{o,1}) at the optical terminal (322a, 322b, 322c), to couple it into the optical waveguide (3) *and in particular to transmit it to an antenna node (20a, 20b, 20c),* and
- to make available an optical reception signal (S_{o,2}) arriving at the optical terminal (322a, 322B, 322c), *in particular from an antenna node (20),* via the optical waveguide (3), as a reception signal (S₂) at the signal terminal (351a, 351b, 351c) and to transmit it to the data relaying unit (36).

15. Antenna node (20a, 20b, 20c) for wireless transmission of data to a mobile communications device (6a, 6b, 6c) having an antenna (61a, 61b, 61c), in particular a mobile communications antenna, comprising
- a mobile communications antenna (24a, 24b, 24c), the mobile communications antenna (24a, 24b, 24c) being configured to establish radio connection with the mobile communications device (6a, 6b, 6c),
- at least one antenna-side transmission unit (210a, 210b, 210c) according to any one of claims 9 to 12, the signal terminal of which is connected to the antenna (61a, 61b, 61c), and
- an optical waveguide (3) connected to the optical terminal (222a, 222b, 222c) of the antenna-side transmission unit (210a, 210b, 210c).

16. Antenna node (20a, 20b, 20c) according to claim 15, wherein the antenna-side transmission unit (210a, 210b, 210c) is in particular configured to generate light (S_{L}) by means of a laser (1) and to direct the light onto an electro-absorption modulator (2) and in that way
- to provide a signal (S₂^{∼}) arriving at its signal terminal (251a, 251b, 251c) from an amplifier (23) as a modulated optical signal (S₂) at the optical terminal (222a, 222b, 222c), to couple it into the optical waveguide (3), and to transmit it to a central node (30), and
- to make available an optical signal (S₁) arriving via the optical waveguide at the optical terminal (222a, 222b, 222c), in particular from a central node (30), as a send signal (S₁^{∼}) at the signal terminal (251a, 251b, 251c), and to transmit it via the bidirectional amplifier (23) to the mobile communications antenna (24a, 24b, 24c).

17. Antenna node (20a, 20b, 20c) according to claim 15 or 16, further comprising a bidirectional amplifier (23a, 23b, 23c) connected to the mobile communications device (24a, 24b, 24c)
- which is connected to the signal terminal (251a, 251b, 251c) of the antenna-side transmission unit (210a, 210b, 210c), and
- which is configured
- to amplify data accepted by the mobile communications antenna (24a, 24b, 24c) and to forward it as an electrical reception signal (S₂^{∼}) to the signal terminal (251a, 251b, 251c) of the antenna-side transmission unit (210a, 210b, 210c), and
- to amplify signals (S₁^{∼}) provided by the antenna-side transmission unit (210a, 210b, 210c) at its signal terminal (251a, 251b, 251c) and to forward them to the mobile communications antenna for delivery.

18. Data transmission network (40), comprising
- a central node (30) according to claim 13 or 14, and
- a plurality of antenna nodes (20a, 20b, 20c) according to claim 15, 16 or 17,
wherein the optical terminals (222a, 222b, 222c) of the antenna-side transmission unit (210a, 210b, 210c) of each antenna node (20a, 20b, 20c) and the optical terminal (322a, 322b, 322c) of the central transmission units (310a, 310b, 310c) of the central node (30) are connected with each other via a respective optical waveguide (3a, 3b, 3c), and
wherein preferably at least one mobile communications device (6a, 6b, 6c) that is in radio communication with the mobile communications antennae (24a, 24b, 24c).

19. Data exchange network (70) for data transmission, comprising
- a central interface (7) with terminals (71a, 71b, 71c) and
- a plurality of transmission units (10a, 10b, 10c) according to any one of claims 9 to 12, wherein the respective optical terminal (22a, ..., 22f) of the individual transmission units (10a, ..., 10f) are connected to the respective terminal (71a, ..., 71f) of the interface (7) by means of an optical waveguide (3a, ..., 3f),
- wherein the interface (7) is configured to distribute optical signals (Sₒ) arriving at it via one of the optical waveguides and to forward them to the other transmission units (10a, ..., 10f),
- wherein at least one sending and receiving frequency is associated with each transmission unit (10a, 10b, 10c), and wherein in the respective controller (5) of each of the transmission units (10a, ..., 10f) the transmission units (10a, ..., 10f) associated with each of the sending and receiving frequencies are stored, and
- wherein the controllers (5) of the transmission units (10a, ..., 10f) are configured, in the event of data transmission, to set their laser (1), by driving a respective electrical input (11), to an optical frequency (f_{L}), which is within an optical frequency range (F), in particular of +/- 1 GHz, around the optical frequency of the transmission unit (10a, ..., 10f) selected for the reception.

## Revendications

1. Procédé de réception d'un signal de réception (S_{O,R}) optique, modulé, en particulier modulé en amplitude, de préférence produit par modulation de la lumière (S_{L}) d'un laser (1),
- pourvu d'une unité de transmission (10) comprenant un laser (1) doté d'une entrée électrique (11) pour commander le courant laser (I_{L}), ainsi que la fréquence de la lumière (S_{L}) émise par le laser (1), dans lequel le laser (1) présente une sortie laser optique (12), ainsi qu'un modulateur d'électroabsorption (2) monté en aval de la sortie laser optique (12), qui présente une borne de modulation (21) électrique,
- dans lequel le laser (1) est orienté vers le modulateur d'électroabsorption (2) et la lumière (S_{L}) du laser (1) est dirigée à travers le modulateur d'électroabsorption (2) et est couplé au niveau d'une borne optique (22) du modulateur d'électroabsorption (2) dans un guide d'ondes de lumière (3),
**caractérisé en ce**
- **que** le signal de réception optique (S_{O,R}) est orienté vers le laser (1) avec une fréquence optique se situant dans une plage de fréquences optiques prédéfinie par le biais du guide d'ondes de lumière (3) à travers le modulateur d'électroabsorption (2),
- **que** le laser (1) par commande de l'entrée électrique (11) est préréglé sur une fréquence optique (f_{L}) prédéfinie, qui se situe dans une plage de fréquences optiques (F), qui se situe en particulier dans +/-1 GHz autour de la fréquence optique (f_{R}) du signal de réception optique (S_{O,R}) reçu,
- **qu'**en raison de la projection du signal de réception optique (S_{O,R}) sur le laser (1) la fréquence optique (f_{L}) de la lumière (S_{L}) émise par le laser (1) est adaptée et/ou harmonisée à la fréquence optique (f_{R}) du signal de réception optique (S_{o,R}) reçu,
- **que** la lumière (S_{L}) émise par le laser (1) et le signal de réception optique (S_{o,R}) reçu par le biais du guide d'ondes de lumière (3) sont superposés dans le modulateur d'électroabsorption (2), en ce que le signal de superposition ainsi produit est converti en un signal de réception électrique (I_{R}), en particulier en un signal de courant électrique (I_{R}), par le modulateur d'électroabsorption (2), qui correspond de préférence au trajet de courant (I_{R}) au niveau de la borne de modulation (21) électrique du modulateur d'électroabsorption (2), et
- un signal de réception (S_{R}) est mis à disposition, qui correspond au signal de réception électrique (I_{R}) ou qui est dérivé de celui-ci, et est tenu disponible au niveau d'une borne de signal (51), en particulier en tant que signal de courant ou de tension.

2. Procédé selon la revendication 1 pour envoyer et recevoir simultanément des signaux optiques (S_{O,R}, S_{O,T}), **caractérisé en ce**
a) **qu'**un signal d'émission à transmettre (S_{T}) en tant que signal d'émission électrique (U_{T}), en particulier en tant que signal de tension électrique, est mis à disposition,
b) **que** le signal d'émission électrique (U_{T}) est appliqué en tant que signal de tension pendant la réception selon la revendication 1 à la borne de modulation (21) du modulateur d'électroabsorption (2) et par modulation de la lumière (S_{L}) générée par le laser (1) un signal d'émission optique (S_{O,T}) produit dans le guide d'ondes de lumière (3) est ainsi couplé,
c) **qu'**est déterminé le courant absorbé par le modulateur d'électroabsorption (2) et un signal de courant (I_{R}) est ainsi établi, qui est absorbé lorsque ledit signal d'émission électrique (U_{T}) est prédéfini par le modulateur d'électroabsorption (2),
d) **que** sur la base de critères prédéfinis ledit trajet de courant temporel (I_{R,m}) est modélisé, qui résulte lors d'une émission prédéfinie du modulateur d'électroabsorption (2) par la lumière (S_{L}) du laser (1) et d'une application de signal prédéfinie avec le signal d'émission électrique (U_{T}) au niveau de la borne de modulation électrique (21) du modulateur d'électroabsorption (2), lorsqu'aucun signal de réception optique (S_{O,R}) n'est reçu par le biais du guide d'ondes de lumière (3) ou qu'un signal de réception optique (S_{O,R}) est reçu, qui ne contient aucun signal modulé, et que ledit trajet de courant est tenu à disposition en tant que trajet de courant modélisé (I_{R,m}),
e) **que** la différence (ΔI) est formée entre le trajet de courant (I_{R}) mesuré à l'étape c) et le trajet de courant (I_{R,m}) modélisé à l'étape d), et
f) **que** ladite différence (ΔI) est supposée provenir du signal de réception optique (S_{O,R}) et est fournie en tant que signal de réception (S_{R}).

3. Procédé selon la revendication 1 ou 2, **caractérisé en ce**
- **que** la lumière (S_{L}) du laser (1) est orientée en outre sur un autre modulateur d'électroabsorption (2'),
- **que** les bornes optiques (22, 22') des deux modulateurs d'électroabsorption (2, 2') sont raccordées à respectivement l'une des deux entrées de polarisation (41, 41') d'un séparateur de faisceau polarisant (4) et la sortie (42) du séparateur de faisceau polarisant (4) est couplé au guide d'ondes de lumière (3),
- **qu'**avec les deux modulateurs d'électroabsorption (2, 2') est déterminé respectivement un signal de réception électrique (I_{R}, I_{R}'), dans lequel le signal de réception électrique (I_{R}, I_{R}') est tenu à disposition avec l'intensité de signal plus élevé que le signal de réception (S_{R}).

4. Procédé selon la revendication 3 pour envoyer et recevoir simultanément des signaux optiques (S_{O,R}, S_{O,T}), **caractérisé en ce que** ledit modulateur d'électroabsorption (2, 2') est utilisé pour l'envoi du signal d'émission optique (S_{O,T}), au niveau duquel est déterminé le signal de réception électrique (I_{R}, I_{R}') respectivement plus faible,
dans lequel en particulier le signal d'émission à transmettre (S_{T}), de préférence sous la forme d'un signal de tension électrique, est appliqué au niveau de la borne de modulation (21, 21') dudit modulateur d'électroabsorption (2, 2'), au niveau duquel est déterminé le signal de réception électrique (I_{R}, I_{R}') respectivement plus faible.

5. Procédé selon l'une quelconque des revendications précédentes pour recevoir et envoyer des signaux optiques (S_{O,R}, S_{O,T}) modulés, **caractérisé en ce**
- **que** pour produire un signal de réception optique (S_{O,R}) modulé de la lumière (SL) avec une fréquence optique (f_{R}) prédéfinie est modulée avec un signal (S₁) à transmettre, et
- **qu'**alternativement dans des intervalles de temps consécutifs
- des signaux sont reçus avec le procédé de la revendication 1, dans lequel la fréquence optique (f_{L}) du laser (1) est réglée sur la fréquence optique (f_{R}) prédéfinie, et
- ensuite dans l'intervalle de temps consécutif respectif de la lumière (S_{L}) avec la même fréquence optique (f_{R}) prédéfinie du laser (1) est fournie sur le modulateur d'électroabsorption (2) et un signal d'émission à transmettre (S_{T}), en particulier sous la forme d'un signal de tension électrique, est prédéfini au niveau de la borne de modulation (21) électrique du modulateur d'électroabsorption (2), de sorte que la lumière (S_{L}) passant à travers le modulateur d'électroabsorption (2) correspondant au signal d'émission à transmettre (S_{T}) est atténuée et que le signal d'émission optique (S_{O,T}) ainsi obtenu est couplé et transmis dans le guide d'ondes de lumière (3).

6. Procédé selon l'une quelconque des revendications précédentes pour recevoir et envoyer des signaux optiques (S_{O,1}, S_{O,2}) modulés, **caractérisé en ce**
- **que** pour produire le signal de réception (S_{O,1}, S_{O,R}) un signal de données (D₁, D₂) avec une première fréquence électrique prédéfinie est modulé, de sorte qu'il présente des composantes de fréquence dans une première plage de fréquences (F_{el,1}) autour de la fréquence électrique (f_{el,1}) prédéfinie et que le signal (S₁) ainsi obtenu est utilisé ensuite pour moduler la lumière avec une fréquence optique prédéfinie et un signal de réception optique (S_{O,1}, S_{O,R}) modulé est ainsi obtenu,
- **que** ledit signal de réception (S_{O,1}, S_{O,R}) est obtenu avec le procédé de la revendication 1 en utilisant de la lumière (S_{L}) avec la fréquence optique prédéfinie et un signal de réception électrique (I_{R}) est ainsi obtenu, qui présente des composantes de fréquence dans une première plage de fréquences électriques (F_{el,1}) prédéfinie, et
- simultanément un signal d'émission électrique (U_{T}), qui présente des composantes de signaux dans une bande de fréquences électriques (F_{el,2}) différente de la première bande de fréquences et ne se chevauchant pas avec celle-ci, de préférence espacée de celle-ci, est appliqué au modulateur d'électroabsorption (2) et au moyen du laser (1) de la lumière (S_{L}) avec la fréquence optique prédéfinie est fournie sur le modulateur d'électroabsorption (2),
- de sorte que la lumière passant à travers le modulateur d'électroabsorption (2) correspondant au signal d'émission à transmettre (S_{T}) est atténuée et que le signal d'émission optique (S_{O,T}) ainsi obtenu est couplé et transmis dans le guide d'ondes de lumière (3).

7. Procédé de transmission de signaux d'un nœud central (30) à un nœud d'antenne (20a, 20b, 20c) disposé à distance du nœud central (30), pourvu d'une antenne (24a, 24b, 24c), de préférence une antenne radio mobile,
- dans lequel un signal de données (D₁) reçu au préalable par le biais d'un réseau de données (34) est fourni dans le nœud central (30) et est modulé ensuite avec au moins une fréquence (f₁, f₂) prédéfinie par un oscillateur (37) et un signal électrique (I₁) modulé est ainsi produit,
- dans lequel au moyen d'une unité de transmission centrale (310a, 310b, 310c) sur la base du signal électrique (I₁) modulé un signal optique (S_{O,1}) modulé est fourni et est couplé dans le guide d'ondes de lumière (3) et est transmis à l'un des nœuds d'antenne (20a, 20b, 20c),
- dans lequel sur la base du signal optique (S_{O,1}) ainsi produit dans le nœud d'antenne (20a, 20b, 20c) avec le procédé d'une des revendications 1 à 6 un signal de réception (S₁^{∼}) est déterminé au moyen d'une unité de transmission (210a, 210b, 210c) côté antenne et est fourni à la borne de signal (251a, 251b, 251c) de l'unité de transmission (210a, 210b, 210c) côté antenne, et
- dans lequel le signal de réception (S₁^{∼}) est transmis, le cas échéant de de manière amplifiée, de préférence sous la forme d'un signal de courant ou de tension, à l'antenne (24a, 24b, 24c) du nœud d'antenne (20a, 20b, 20c) et est émis par celle-ci.

8. Procédé selon la revendication 7, **caractérisé en ce**
- **que** des signaux électromagnétiques, modulés, entrant par l'antenne (24a, 24b, 24c) du nœud d'antenne (20a, 20b, 20c), en particulier des signaux radio mobiles, sont reçus et, le cas échéant transférés de manière amplifiée à la borne de signal (251a, 251b, 251c) de l'unité de transmission (210a, 210b, 210c) côté antenne du nœud d'antenne (20a, 20b, 20c), et un signal optique (S₂) est produit par l'unité de transmission (210a, 210b, 210c) côté antenne selon l'une quelconque des revendications précédentes et est transmis par le biais du guide d'ondes de lumière (3) au nœud central (30),
- **que** ledit signal optique (S₂) est reçu dans le nœud central (30) et est converti en particulier selon l'une quelconque des revendications précédentes, au moyen de l'unité de transmission centrale (310a, 310b, 310c) en un signal électrique (I₂),
- **que** ledit signal électrique (I₂) est démodulé en utilisant une fréquence (f₁, f₂) prédéfinie par l'oscillateur (37) et le signal de données (D₂) ainsi démodulée est tenu à disposition dans le nœud central (30) et le cas échéant est transmis en outre par le biais du réseau de données (34).

9. Unité de transmission (10), en particulier pour la réalisation d'un procédé selon l'une quelconque des revendications précédentes, comprenant
- un laser (1) doté d'une entrée électrique (11) et d'une sortie laser optique (12),
- au moins un modulateur d'électroabsorption (2) monté en aval de la sortie laser optique (12) du laser (1) avec une borne de modulation électrique (21) et une borne optique (22) pour le couplage optique du modulateur d'électroabsorption (2) au guide d'ondes de lumière (3),
dans lequel le laser (1) est orienté et positionné sur la borne optique (22) du modulateur d'électroabsorption (2) de telle manière que la lumière (S_{L}) du laser (1) sort du modulateur d'électroabsorption (2) au niveau de la borne optique (22) et que de la lumière arrivant sur le modulateur d'électroabsorption (2) à partir de la borne optique (22) est orientée sur le laser (1),
dans lequel le modulateur d'électroabsorption (2) est conçu pour superposer la lumière (S_{L}) émise par le laser (1) et un signal de réception optique (S_{O,R}) entrant au niveau de la borne optique (22), et pour préparer un signal de réception électrique (I_{R}) au niveau de sa borne de modulation électrique (21), qui correspond à un signal de superposition de la lumière (S_{L}) émise par le laser (1) et du signal de réception optique (S_{O,R}),
- une unité de commande (5) reliée à l'entrée électrique (11) du laser (1) et à la borne de modulation électrique (21) du modulateur d'électroabsorption (2) avec une borne de signal électrique (51), dans laquelle l'unité de commande (5) est conçue pour
- définir le courant laser (I_{L}), ainsi que la fréquence de la lumière (S_{L}) fournie par le laser (1) par le biais de l'entrée électrique (11) du laser (1) à une valeur dans une plage de fréquences optiques, qui se situe en particulier dans la plage de +/- 1 GHz autour de la longueur d'onde de la lumière dirigée dans le guide d'ondes de lumière (3) ou autour de la fréquence optique (f_{R}) du signal de réception optique (S_{O,R}) reçu, et
- pour analyser le signal de réception électrique (I_{R}) au niveau de la borne de modulation électrique (21) du modulateur d'électroabsorption (2) et tenir ainsi à disposition un signal de réception (S_{R}) correspondant à un signal de réception optique (S_{O,R}) entrant au niveau de la borne optique (22).

10. Unité de transmission (10) selon la revendication 9 pour envoyer et recevoir simultanément des signaux optiques (S_{O,R}, S_{O,T}), **caractérisée en ce que** l'unité de commande (5) est conçue en outre,
- pour appliquer en fonction du signal d'émission à transmettre (S_{T}) adjacent à sa borne de signal (51) en tant que signal d'émission électrique (U_{T}) à produire pendant la réception de signaux au niveau de la borne de modulation (21) du modulateur d'électroabsorption (2),
- pour déterminer le courant absorbé par le modulateur d'électroabsorption (2) et produire ainsi un signal de courant (I_{R}),
- pour modéliser sur la base de critères prédéfinis ledit trajet de courant temporel, qui résulte d'une émission prédéfinie du modulateur d'électroabsorption (2) par la lumière (S_{L}) du laser (1) et d'une application de signal prédéfinie au niveau de la borne de modulation électrique (21) du modulateur d'électroabsorption (2), lorsqu'aucun signal de réception optique (S_{O,R}) n'entre par le biais du guide d'ondes de lumière ou qu'un signal de réception optique (S_{O,R}) entre, qui ne contient aucun signal modulé, et ledit trajet de courant est tenu à disposition en tant que trajet de courant modélisé (I_{R,m}),
- pour former la différence (ΔI) entre le trajet de courant (I_{R}) mesuré et le trajet de courant (I_{R,m}) modélisé, et pour fournir ladite différence ou un trajet de signal déduit de celle-ci en tant que signal de réception (S_{R}).

11. Unité de transmission (10) selon la revendication 9 ou 10, **caractérisée en ce**
- **qu'**un autre modulateur d'électroabsorption (2') est prévu, sur lequel est orienté la lumière (S_{L}) du laser (1),
- **que** les bornes optiques (22, 22') des deux modulateurs d'électroabsorption (2, 2') sont raccordées à respectivement l'une des deux entrées de polarisation (41, 41') d'un séparateur de faisceau polarisant (4) et la sortie (42) du séparateur de faisceau polarisant (4) est couplé au guide d'ondes de lumière (3),
- **que** les deux modulateurs d'électroabsorption (2, 2') sont conçus respectivement pour déterminer un signal de réception électrique (I_{R}, I_{R}') au niveau de leur borne de modulation électrique (21), et
- **que** l'unité de commande (5) est conçue pour tenir à disposition ledit signal de réception électrique (I_{R}, I_{R}') avec l'intensité de signal plus élevé que le signal de réception (S_{R}) au niveau de leur borne de signal (51).

12. Unité de transmission (10) selon la revendication 11 pour envoyer et recevoir simultanément des signaux électriques (S_{O,R}, S_{O,T}), **caractérisée en ce que** l'unité de commande (5) est conçue pour sélectionner ledit modulateur d'électroabsorption (2, 2') pour l'envoi du signal d'émission optique (S_{O,T}), au niveau duquel elle a déterminé le signal de réception électrique (I_{R}, I_{R}') respectivement plus faible, dans lequel elle applique le signal d'émission à transmettre (S_{T}), en particulier sous la forme d'un signal de tension électrique, au niveau de la borne de modulation (21, 21') dudit modulateur d'électroabsorption (2, 2'), au niveau duquel elle a déterminé le signal de réception électrique (I_{R}, I_{R}') respectivement plus faible.

13. Nœud central (30) comprenant
- une unité de commutation des données (36) dotée d'au moins une borne de données (36a) pour le raccordement à un réseau de données (34), d'au moins une borne de modulation (360a, 360b, 360c) et d'au moins une entrée de fréquence (36f₁, 36f₂),
- un oscillateur (37) relié à l'entrée de fréquence (36f₁, 36f₂), dans lequel l'oscillateur (37) est conçu pour produire des signaux de fréquence (f₁, f₂) d'après des critères prédéfinis et pour transmettre les signaux de fréquence (f₁, f₂) à l'entrée de fréquence (36f₁, 36f₂), et
- au moins une unité de transmission centrale (310a, 310b, 310c) selon l'une quelconque des revendications 9 à 12, dans laquelle la borne de signal (351a, 351b, 351c) de l'unité de transmission centrale (310a, 310b, 310c) est reliée à une borne de modulation (360a, 360b, 360c) de l'unité de commutation des données (36) et un guide d'ondes de lumière (3) est couplé dans la borne optique (322a, 322b, 322c) de l'unité de transmission centrale (310a, 310b, 310c),
dans lequel l'unité de commutation des données (36) est conçue pour,
- moduler un signal de données (D₁) entrant par le biais du réseau de données (34) au niveau de la borne de données (36a) selon l'un quelconque des procédés de modulation prédéfinis sur au moins un signal de fréquence (f₁, f2) transmis par l'oscillateur (37) à l'entrée de fréquence (36f₁, 36f₂) et le fournir au niveau de la borne de modulation (360a, 360b, 360c) en tant que signal d'émission (S₁) modulé et le transmettre d'après des critères prédéfinis à l'unité de transmission centrale (310a, 310b, 310c) correspondante et
- démoduler un signal de réception (S₂) entrant par le biais de la borne de modulation (360a, 360b, 360c) par l'unité de transmission centrale (310a, 310b, 310c) selon l'un quelconque des procédés de démodulation prédéfinis au moyen d'un signal de fréquence (f₁, f₂) prédéfini par l'oscillateur (37) et le fournir à la première borne de données électrique (36a) en tant que signal de données démodulé et le transférer au réseau de données (34).

14. Nœud central (30) selon la revendication 13, dans lequel l'unité de transmission centrale (310a, 310b, 310c) est conçue de préférence pour
- produire de la lumière (S_{L}) au moyen d'un laser (1) et de l'orienter sur un modulateur d'électroabsorption (2) et
- coupler ainsi dans le guide d'ondes de lumière (3) un signal d'émission (S₁) entrant au niveau de la borne de signal (351a, 351b, 351c) de l'unité de transmission centrale (310a, 310b, 310c) par l'unité de commutation de données (36) à fournir en tant que signal d'émission optique (S_{O,1}) modulé au niveau de la borne optique (322a, 322b, 322c), et *le transmettre en particulier à un nœud d'antenne (20a, 20b, 20c),* et
- mettre à disposition un signal de réception optique (S_{O,2}) entrant en *particulier par un nœud d'antenne (20),* par le biais du guide d'ondes de lumière (3) au niveau de la borne optique (322a, 322b, 322c) en tant que signal de réception (S₂) au niveau de la borne de signal (351a, 351b, 351c) et le transmettre à l'unité de commutation des données (36).

15. Noeud d'antenne (20a, 20b, 20c) pour la transmission sans fil de données à un appareil radio mobile (6a, 6b, 6c) doté d'une antenne (61a, 61b, 61c), en particulier une antenne radio mobile, comprenant
- une antenne radio mobile (24a, 24b, 24c), dans laquelle l'antenne radio mobile (24a, 24b, 24c) est conçue pour entrer en communication radio avec l'appareil radio mobile (6a, 6b, 6c),
- au moins une unité de transmission (210a, 210b, 210c) côté antenne selon l'une quelconque des revendications 9 à 12, dont la borne de signal est raccordée à l'antenne (61a, 61b, 61c), et
- un guide d'ondes de lumière (3) relié à la borne optique (222a, 222b, 222c) de l'unité de transmission (210a, 210b, 210c) côté antenne.

16. Noeud d'antenne (20a, 20b, 20c) selon la revendication 15, dans lequel l'unité de transmission (210a, 210b, 210c) côté antenne est conçue en particulier pour produire de la lumière (S_{L}) au moyen d'un laser (1) et de l'orienter sur un modulateur d'électroabsorption (2) et
- coupler ainsi dans le guide d'ondes de lumière (3) un signal (S₂^{∼}) entrant par l'amplificateur (23) au niveau de sa borne de signal (251a, 251b, 251c) à fournir en tant que signal optique (S₂) modulé au niveau de la borne optique (222a, 222b, 222c), et transmettre en particulier à un nœud central (30), et
- mettre à disposition un signal optique (S₁) entrant en particulier par un nœud central (30), par le biais du guide d'ondes de lumière (3) au niveau de la borne optique (222a, 222b, 222c) en tant que signal d'émission (S₁^{∼}) au niveau de la borne de signal (251a, 251b, 251c) et le transmettre par le biais de l'amplificateur bidirectionnel (23) à l'antenne radio mobile (24a, 24b, 24c).

17. Nœud d'antenne (20a, 20b, 20c) selon la revendication 15 ou 16, comprenant en outre un amplificateur bidirectionnel (23a, 23b, 23c) raccordé à l'antenne radio mobile (24a, 24b, 24c)
- qui est raccordé à la borne de signal (251a, 251b, 251c) de l'unité de transmission (210a, 210b, 210c) côté antenne, et
- qui est conçu pour
- amplifier les données enregistrées par l'antenne radio mobile (24a, 24b, 24c) et les transférer en tant que signal de réception électrique (S₂^{∼}) à la borne de signal (251a, 251b, 251c) de l'unité de transmission (210a, 210b, 210c) côté antenne, et
- amplifier les signaux (S₁^{∼}) fournis par l'unité de transmission (210a, 210b, 210c) côté antenne à sa borne de signal (251a, 251b, 251c) et les transférer pour transmission à l'antenne radio mobile (24a, 24b, 24c).

18. Réseau de transmission de données (40) comprenant
- un nœud central (30) selon la revendication 13 ou 14 et
- une pluralité de nœuds d'antenne (20a, 20b, 20c) selon la revendication 15, 16 ou 17,
dans lequel respectivement la borne optique (222a, 222b, 222c) de l'unité de transmission (210a, 210b, 210c) côté antenne du nœud d'antenne (20a, 20b, 20c) et la borne optique (322a, 322b, 322c) des unités de transmission centrales (310a, 310b, 310c) du nœud central (30) sont reliées entre elles par le biais respectivement d'un guide d'ondes de lumière (3a, 3b, 3c), et
dans lequel de préférence au moins un appareil radio mobile (6a, 6b, 6c) étant en communication radio avec les antennes radio mobiles (24a, 24b, 24c).

19. Réseau d'échange de données (70) pour la transmission de données, comprenant
- une interface centrale (7) dotée de bornes (71a, 71b, 71c) et
- une pluralité d'unités de transmission (10a, 10b, 10c) selon l'une quelconque des revendications 9 à 12, dans laquelle la borne optique respective (22a, ..., 22f) de chaque unité de transmission (10a, ..., 10f) est reliée respectivement à une borne (71a, ..., 71f) de l'interface (7) au moyen d'un guide d'ondes de lumière (3a, ..., 3f),
- dans lequel l'interface (7) est conçue pour répartir par elle des signaux optiques (S_{O}) entrant par le biais d'un des guides d'ondes de lumière et les transférer aux autres unités de transmission (10a, ..., 10f),
- dans lequel chaque unité de transmission (10a, 10b, 10c) est associée au moins à une fréquence d'envoi et de réception et dans lequel respectivement les unités de transmission (10a, ..., 10f) associées aux fréquences d'envoi et de réception sont stockées dans l'unité de commande (5) respective de chacune des unités de transmission (10a, ..., 10f), et
- dans lequel les unités de commande (5) des unités de transmission (10a, ..., 10f) sont conçues pour régler, en cas de transmission des données, leur laser (1) par actionnement de l'entrée électrique (11) respective sur une fréquence optique (f_{L}), qui se trouve dans une plage de fréquences optiques (F), en particulier de +/- 1 GHz autour de la fréquence optique de l'unité de transmission (10a, ..., 10f) sélectionnée pour la réception.
